# EUROPEAN PATENT APPLICATION

(11) **EP 2 908 545 A1**
(43) Date of publication of application: **19.08.2015**
(21) Application number: 14181519.1
(22) Date of filing: 20.08.2014
(51) Int. Cl.: H04N 21/482, H04N 21/433, H04N 21/431

(54) **Electronic device, method and storage medium**

(30) Priority: 18.02.2014 JP 2014028612
(71) Applicant: Kabushiki Kaisha Toshiba, Tokyo 105-8001 (JP); Toshiba Lifestyle Products & Services Corporation, Ome-shi, Tokyo 198-8710 (JP)
(72) Inventor: Tsuji, Masashi, Tokyo, 105-8001 (JP)
(74) Representative: Henkel, Breuer & Partner

(57) **Abstract**

According to one embodiment, a method of displaying using an electronic device includes displaying a first screen image (200) including first icons indicative of scheduled-for-recording TV programs and second icons indicative of recorded TV programs. The first icons are arranged in the time/date order of the scheduled-for-recording TV programs. The second icons are arranged in time/date order of the recorded TV programs. One of the first icon of the scheduled-for-recording TV program, which will be recorded next, is arranged near one of the second icons of the most recently recorded TV program. A focus (204) for selecting at least one TV program is set on the recorded TV program whose recording time/date is most recent, when transition to the first screen image has been made.

## Description

Embodiments described herein relate generally to an electronic device, a method and a storage medium.

A digital television apparatus (hereinafter referred to simply as "TV apparatus") that can be connected to the Internet and can provide users with various types of information by communication with servers on the Internet have recently been developed.

With such a TV apparatus, TV programs can be recorded on a recording device (such as an HDD) connected to the apparatus. The user can then select and view desired recorded programs at desired times.

The TV apparatus can display a list of, for example, TV programs that are currently scheduled to be recorded (hereinafter, referred to as "scheduled-for-recording TV programs"), or recorded TV programs.

In accordance with increases in recording capacity, the TV apparatus has come to be able to record a large number of TV programs. However, if a large number of scheduled-for-recording TV programs or a large number of recorded TV programs are displayed simultaneously, the user does not find a desired program easily because each program in the list is displayed in a small size.

A general architecture that implements the various features of the embodiments will now be described with reference to the drawings. The drawings and the associated descriptions are provided to illustrate the embodiments and not to limit the scope of the invention.
FIG. 1 shows a menu screen example displayed on a TV apparatus according to an embodiment;
FIG. 2 shows an overall configuration example of a TV apparatus 10 according to the embodiment;
FIG. 3 is a view for explaining state transition examples of a TV program;
FIG. 4 is a flowchart showing a procedure example of processing performed by a view controller 142 when a list of recorded TV programs is displayed;
FIG. 5 is a view for explaining in detail an MGR top page example displayed on a TV apparatus 10;
FIG. 6 is a view for explaining in detail a display position example of each TV program on an MGR top page 200;
FIG. 7 shows display form examples of thumbnail images indicating scheduled-for-recording TV programs;
FIG. 8 shows display form examples of thumbnail images indicating currently recorded TV programs;
FIG. 9 shows display form examples of thumbnail images indicating recorded TV programs;
FIG. 10 shows a display form example of a thumbnail image used when a series of TV programs is displayed using one folder;
FIG. 11 shows a pop-up example showing a TV program in detail;
FIG. 12 shows an example of a series folder pop-up;
FIG. 13 is a table showing action button examples displayed in accordance with respective TV program states;
FIG. 14 is a view for explaining an example case where a focused TV program is set in a predetermined position on the MGR top page 200;
FIG. 15 is a view for explaining an example case where a TV program, for which a focus 204 is set, is deleted;
FIG. 16 is a view for explaining another example case where a TV program, for which the focus 204 is set, is deleted;
FIG. 17 is a view for explaining yet another example case where a TV program, for which the focus 204 is set, is deleted;
FIG. 18 is a view for explaining a TV program example for which a focus 323 is set in a series folder pop-up 320;
FIG. 19 is a flowchart showing a procedure example of MGR check processing;
FIG. 20 is a flowchart showing a procedure example of processing performed to replay a recorded TV program on a TV apparatus 10 according to the embodiment; and
FIG. 21 a view for explaining a state transition example of a replay target program occurring in accordance with a user's operation of a remote controller 20.

Various embodiments will be described hereinafter with reference to the accompanying drawings.

In general, according to one embodiment, a method of displaying using an electronic device includes displaying a first screen image in accordance with a user operation. The first screen image includes first icons indicative of scheduled-for-recording TV programs and second icons indicative of recorded TV programs. The first icons are arranged in time/date order of the scheduled-for-recording TV programs. The second icons are arranged in time/date order of the recorded TV programs. One of the first icons indicative of a scheduled-for-recording TV program whose recording time/date is next is arranged near one of the second icons indicative of a recorded TV program whose recording time/date is most recent. A focus used to select at least one of the scheduled-for-recording TV programs and the recorded TV programs is set on the recorded TV program whose recording time/date is most recent, when transition to the first screen image has been made.

Referring to the accompanying drawings, an embodiment will be described. An electronic device according to the embodiment may be formed as a stand-alone device, or be built in a set top box, a TV apparatus, a recorder, a mobile terminal, etc. A description will now be given of a case where the electronic device of the embodiment is applied to a TV apparatus that can broadcast various broadcast programs.

It is assumed that when an instruction to activate a cloud service has been issued during viewing a TV program (content), the TV apparatus of the embodiment can display a service menu associated with the TV program, as well as the TV program, and can switch the services included in the service menu in accordance with the display state. When the cloud service is activated in the TV apparatus, the TV apparatus is connected to various servers such that it can communicate with them.

Further, the TV apparatus includes an overall controller that can be connected to a network as described later. The controller includes a log-in data managing module, a communication data managing module, etc. The log-in data managing module manages a common log-in identifier (common ID) shared among a plurality of persons, dedicated log-in identifiers (individual identifiers), etc. The communication data managing module discriminates communication data corresponding to the common log-in identifier from communication data corresponding to the dedicated log-in identifiers to perform selection of a display output. If the common log-in identifier is in a log-in state, the communication data managing module controls not to publish the communication data corresponding to the dedicated log-in identifiers.

The TV apparatus of the embodiment can be used by a plurality of users (clients). The log-in and log-out states in the TV apparatus are managed by each server's table. Further, the log-in data managing module may regularly supply each server with a log-in identifier in the log-in state. As a result, each server can accurately grasp the log-in state of each TV apparatus.

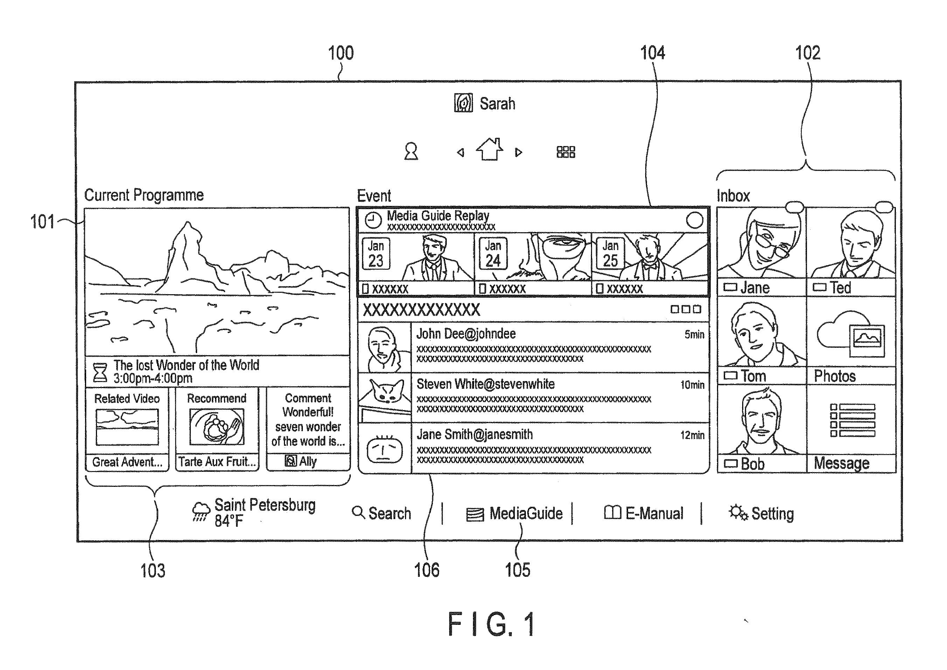

FIG. 1 shows a menu screen image (hereinafter referred to as "the cloud menu screen image") 100 assumed when, for example, the TV apparatus of the embodiment is connected to a network and a log-in is made using an individual ID (in this example, a user whose account name is Sarah has been logged in). This screen image is called "a home (screen image)."

A display area 101 located on the left portion of the cloud menu screen image 100 displays an image of a currently broadcasted program, or a replay image of a program read from a recording device, such as an HDD.

In a display area 102 located on the right portion of the cloud menu screen image 100, a plurality of small guide images are displayed, the number of images being increased. The guide images include guide images for various transmission and reception boxes for receiving reports and recommended data from friends. As the transmission and reception boxes, there are boxes for outlook, mail, message, recommended data, etc. To screen frames indicating the transmission and reception boxes, proper names can be attached. Further, desired images can be selected from an image file and be attached as guide images to the screen frames. When a message or recommended data has reached a transmission and reception box, a circular mark, for example, is attached to a guide image corresponding to the box, or the color of the corresponding frame is changed, or the luminance of the frame is repetitively changed. When a plurality of recommended data items have reached a transmission and reception box, a plurality of circular marks may be attached to corresponding guide images. Also, a numerical value indicating the number of receptions of the plurality of recommended data items may be displayed.

The above-described transmission and reception boxes can be used for, for example, communication with friends. In this case, albums may be transmitted from a friend. Similarly, recommended data may be transmitted from a friend. The recommended data includes recommended TV program information, recommended shopping information, etc. The recommended data also includes recommended scene information, recommended performer information, etc.

Further, a plurality of guide images corresponding to functions are displayed in a display area 103 below the display area 101. When the user operates the TV apparatus in association with the replay image displayed in the display area 101, the guide images are utilized. For instance, when communication is performed between the user and an external server (another user) in association with the replay image displayed in the display area 101, these guide images can be used.

An example of use of the guide images in the display area 102 will be described. For instance, the user can operate a remote controller to focus a cursor on a desired guide image (e.g., a guide image corresponding to a message for a friend). Although in this description, the remote controller is operated, a mobile terminal having a remote controller function, for example, may be operated. Further, the guide images may be called operation buttons. The focused state is indicated in the form of, for example, a frame surrounding the guide image. Alternatively, the focused guide image may have a higher luminance than the other portions (namely, the focused guide image may be highlighted). When the decision button of the remote controller is pressed where the desired guide image is focused (or when the desired guide image is clicked using a click button), the transmission and reception box corresponding to the guide image is opened to thereby display, for example, a message. The message can be displayed using, for example, the entire display area 101, or half the same.

The user can also open the transmission and reception box of the recommended data by operating the remote controller. The recommended data may be recommended TV program information indicating a recommended TV program, or recommended shopping information, which was sent from a friend. In this case, assume that the user has interested in a recommended TV program and wanted to view the program. If at this time, the user has pressed the decision button while focusing a selection button for the displayed recommended TV program information, the TV apparatus automatically starts to replay the TV program. The replay image of the program may be displayed firstly as a small screen image, and be displayed as a large screen image when the user has pressed the decision button.

Each transmission and reception box can be also used to transmit a message to a transmission and reception box or mobile terminal as a communication destination. The recommended TV program information is displayed as an image indicating the title of the TV program, one scene in the TV program, the name of a performer, or the performer. The recommended TV program information also includes a broadcast channel, a broadcast date, a performer's profile, a content server address, etc.

There are two methods for enabling the TV apparatus to obtain program content. In a first method, the program content is obtained by driving a recording device (e.g., an HDD) connected to the TV apparatus. In a second method, it is downloaded from a content server via the Internet. In the first method, a program list search function of searching the programs recorded in the recording device is operated. In the second method, an address assigned to a server having content included in the recommended program information is utilized.

The recommended program information may also include data processed to make it easy to obtain the program content by the user. Namely, the TV program information recommended by a friend is uploaded from, for example, a device used by the friend to a server, where it is processed into TV program information that can be used by the user in this server. The reason why this processing is performed lies in that a broadcast program may differ in the broadcast channel number and/or the broadcast time between different places. In light of this, the TV program information is processed (e.g., the broadcast channel number and/or broadcast time is processed) in the server and is provided to the user, so that the user can easily search for the same program as the program recommended by a friend to view the program. As another method of obtaining the recommended TV program information, there is a method of obtaining the same from, for example, a calendar.

Also, using the guide images shown in the display area 102, a mail message, a short message, etc., can be transmitted to a friend registered in a managing function for managing guide images.

A description will then be given of a use example of the guide images shown in the display area 103. For instance, assume that the currently viewed TV program (the TV program displayed in the display area 101) is a TV drama, and contains a scene the user likes, or a scene wherein a user's favorite performer appears. In this case, the user operates the remote controller to select a recommended guide image and press the decision button. Then, the TV program information viewed by the user is uploaded in a server as attention (or notice) program information. The server can utilize this attention TV program information as a material for generating recommended TV program information or taglist generation information for the TV program. Further, since the server receives attention TV program information associated with various TV programs from many viewers, it can perform statistical processing using the attention TV program information. By virtue of this statistical processing, a program information list showing programs in a decreasing order of popularity stakes can be created.

The user can operate the remote controller to select a guide image for comments and press the decision button. At this time, a screen for permitting input of a short message associated with the user's currently viewing TV program (the TV program image displayed in the display area 101) appears to enable the user to input a message. The message can be input through, for example, the remote controller or the keyboard display of the mobile terminal.

The TV apparatus of the embodiment has a media guide replay function (hereinafter referred to as "the MGR function") for displaying a list of TV programs scheduled to be recorded (hereinafter referred to as "the scheduled-for-recording TV programs") and TV programs already recorded (hereinafter referred to as "the recorded TV programs"). The MGR function is realized by an application program that operates in the TV apparatus.

A display area 104 for displaying (arranging) a widget corresponding to the MGR function is provided in the top center portion of the cloud menu screen image 100 shown in FIG. 1. The display area 104 displays information associated with the MGR function. The display area 104 (the widget corresponding to the MGR function) will be described layer in detail.

The user can utilize the MGR function by operating the remote controller to select the widget corresponding to the MGR function and press the decision button. The screen image 100 further displays a button 105 called, for example, "MediaGuide." The user can also utilize the MGR function by operating the remote controller to select the button 105.

The list of scheduled-for-recording TV programs and recorded TV programs displayed by the MGR function (hereinafter referred to as "the scheduled/recorded TV program list") will be described later in detail.

A display area 106 used to communicate with friends is displayed on the cloud menu screen image 100 below the display area 104. The display area 106 displays, for example, comments from friends corresponding to various types of communication tools (applications).

The guide images shown in FIG. 1, except for the video image in the display area 101, can also be displayed by a mobile terminal having a touch input operation module that also serves as a display module. Namely, the TV apparatus can transfer the guide images and operation signals corresponding to the guide images to the mobile terminal via the communication function of the TV apparatus. As a result, the mobile terminal can keep communication with the TV apparatus, and can operate the TV apparatus using the guide images as described above.

Further, the cloud menu screen image 100 may include an area (not shown in FIG. 1) for displaying an abstract of, for example, various event information items on a certain day of a calendar.

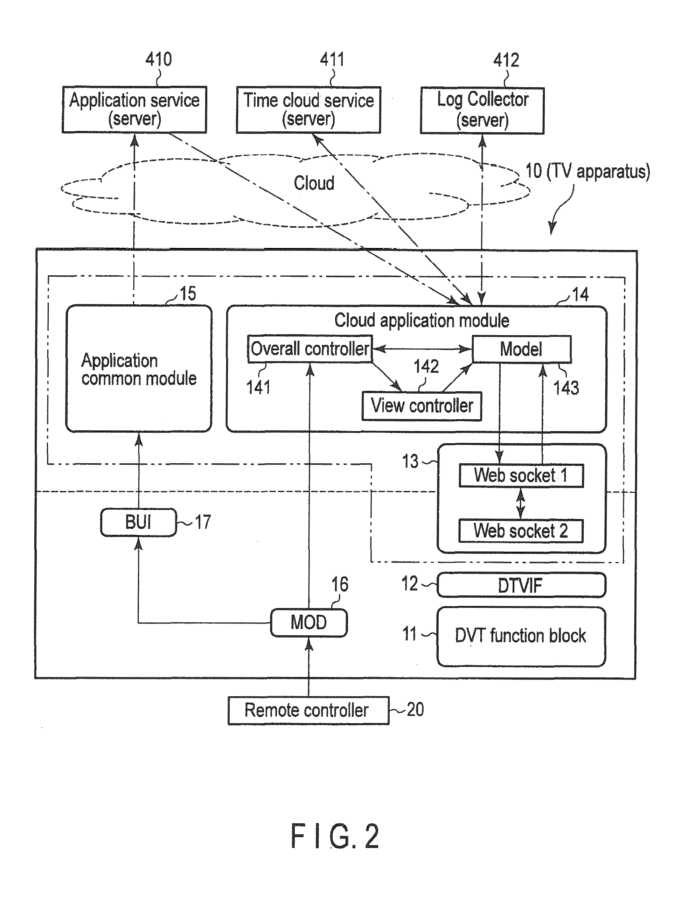

FIG. 2 shows the overall configuration of the TV apparatus 10 of the embodiment. In FIG. 2, the basic functions (such as TV signal reception, demodulation, control signal processing, 3D-associated signal processing, recording, audio processing, video processing and display function) of a digital TV receiver (hereinafter, DTV) are collectively referred to as "the DTV function block (or module) 11." The DTV function block 11 is connected to a browser module via a DTV interface (IF) 12.

In this embodiment, the browser module includes a socket module 13, a cloud application module 14 and an application common module 15.

The socket module 13 includes a server web socket as viewed from the DTV interface 12, and a client web server as viewed from the browser.

The cloud application module 14 includes an overall controller 141, a view controller (display controller) 142 and a model 143. The overall controller 141 processes various events in accordance with commands and instructions. The overall controller 141 controls the view controller 142 to realize various types of rendering processing. The view controller 142 can obtain various images and control signals in the above-mentioned cloud menu screen image 100. The images and control signals based on the operation of the view controller 142 are reflected as images, control buttons and the like in the display module of the TV apparatus 10 via the model 142 and the socket module 13.

The model 143 performs access to servers, acquisition of information from the servers, transmission of information to the servers, DTV operation, and data reception from the DTV. Thus, the model 143 can receive messages from the DTV and transfer them to the servers. Further, the model 143 can cooperate with the view controller 142 to display the messages received from the servers on the screen of the display module of the DTV. The servers may include a server 410 for application services, a server 411 for time cloud services, a server 412 for log collection, etc. Servers (not shown) other than these servers 410 to 412 may be included.

The user can control the TV apparatus 10 by operating a remote controller 20. The operation by the user via the remote controller (i.e., the operation signal from the remote controller 20) is distributed by a moderator (MOD) 16. A key event distributed for the cloud application module 14 is received by (input to) the overall controller 141. Similarly, a key event distributed for the application common module 15 is received by (input to) the application common module 15 via a browser user interface (BUI) 17. The application common module 15 can request the application, designated for the application server 410, in accordance with an application request command. The application sent from the application server 410 is input to the cloud application module 14 via the model 143. The server 412 for log collection can collect logs used in, for example, the TV apparatus 10 and other connected devices.

When the user has requested a cloud service, the application employed for the cloud service in the TV apparatus 10 is activated. If the cloud service has been thus started, viewing content and the service menu associated with it are provided by the time cloud service server 411, whereby the service menu can be displayed. Thus, in accordance with the display state, the service menu associated with the state can be displayed.

The time cloud service server 411 can be connected to other servers and other information processing apparatuses via a network. The time cloud service server 411 can send various types of service data to the TV apparatus 10. The time cloud service server 411 can associate video content with scene information or a tag list created by a metadata creating company, the user, etc. The associated data is arranged in, for example, a table.

Each block shown in FIG. 2 and its operation may be realized by a set of instructions (programs) as software. Further, each block in FIG. 2 incorporates, for example, a processor or a central processing unit (CPU) for performing data processing based on the software. Further, the software is stored in a memory (storage medium) and its version can be updated. The data (software) in the memory can be read by a computer.

The above-mentioned DTV has a plurality of tuners and can simultaneously receive signals of a plurality of channels. After the signals of the channels are demodulated, a plurality of data streams can be obtained. Each data stream includes packets of TV programs, control signals, etc. The streams indicating a plurality of TV programs corresponding to a plurality of channels are stored (recorded) in, for example, an HDD connected via a USB. The HDD can also record management information for managing TV program information that indicates the stored TV programs.

Further, in the TV apparatus 10 of the embodiment, various TV programs can be recorded by scheduling for recording. Scheduling for recording means that the user schedules recording of a desired TV program on a desired recording device (e.g., an HDD). Scheduling for recording is performed by, for example, user's operating the remote controller 20 on a displayed TV program table based on electronic program guide (EPG) data to select the desired TV program. As a result, the desired TV program is recorded on, for example, an HDD. If a plurality of recording device are connected via a home network, the user can designate an HDD as a recording destination.

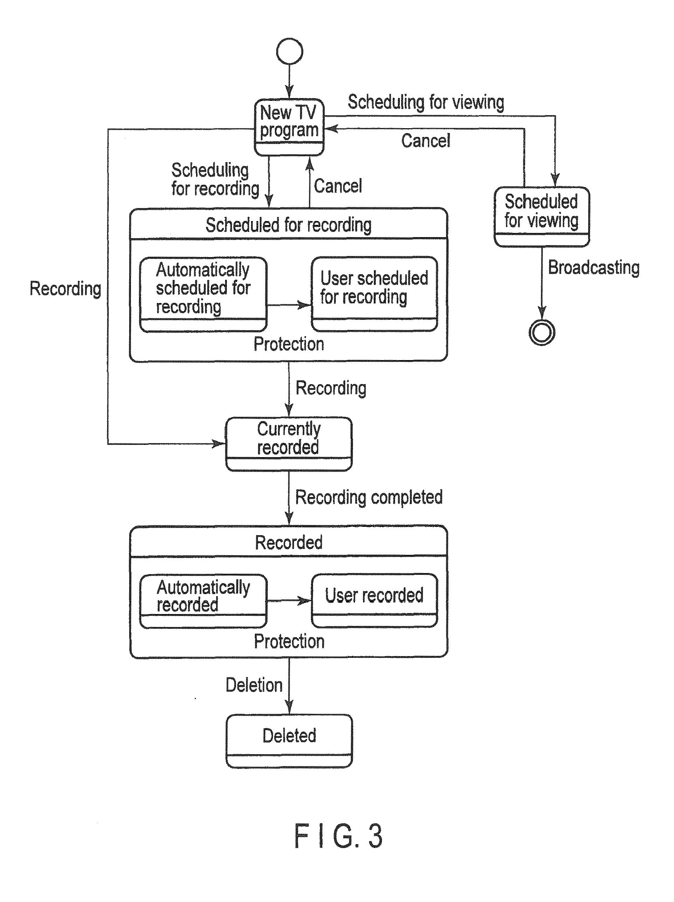

Referring now to FIG. 3, a description will be given of transition of the state of a TV program in the embodiment. As described above, a new TV program added to, for example, the electronic program guide (EPG) can be scheduled to be recorded. Scheduling for recording includes automatic scheduling and user scheduling. Automatic scheduling refers to scheduling for automatically recording a recommended TV program determined from, for example, the attention TV program information collected in the time cloud service server 411, or from the logs collected in the server 412 for log collection. In contrast, user scheduling refers to scheduling for recording the TV program designated (set) by the user. Further, the user scheduling includes scheduling for recording a single TV program designated by the user, and scheduling for recording a plurality of TV programs included in the series of TV programs designated by the user (hereinafter referred to as "scheduling for series recording"). The TV programs of the same series includes, for example, a series of drama.

When scheduling for recording the above-mentioned new TV program has been made, this new TV program is regarded as a scheduled-for-recording one. The scheduled-for-recording TV programs include automatically-scheduled-for-recording TV programs and user-scheduled-for-recording TV programs.

It is assumed that in the HDD for recording TV programs, the area (automatic recording area) used to record a TV program based on the above-mentioned automatic scheduling for recording is discriminated from the area (user recording area) used to record a TV program based on the user scheduling for recording. In this case, the TV programs already recorded based on the automatic scheduling for recording are sequentially deleted beginning with the oldest recording date, when the automatic recording area is full. Namely, automatically recorded TV programs may be automatically deleted (this operation will hereinafter be referred to as "automatic deletion") even if the user does not know it. In view of this, the user is permitted to, for example, change an automatically-scheduled-for-recording TV program to a user-scheduled-for-recording TV program in order to protect the TV program from automatic deletion performed after it is recorded. Automatic deletion is executed, for example, every ten minutes.

When recording of a TV program is started based on automatic scheduling for recording or on user scheduling for recording, the automatically-scheduled-for-recording TV program or the user-scheduled-for-recording TV program becomes a TV program currently being recorded. As well as scheduling for recording (automatic scheduling for recording or user scheduling recording), the user can record a currently broadcasted TV program (new TV program) by pressing, for example, a recording button incorporated in the remote controller 20. In this case, the new TV program becomes a TV program currently being recorded.

After recording of the TV program currently being recorded is finished, this program becomes a recorded TV program. The recorded TV program implies an automatically recorded one or a user recorded one. The automatically recorded TV program is a TV program recorded based on automatic scheduling for recording. On the other hand, the user recorded TV program implies a TV program recorded based on user scheduling for recording, or a TV program recorded by pressing, for example, the recording button incorporated in the remote controller 20. It is possible to change an automatically recorded TV program to a user recorded one to protect this TV program from the above-mentioned automatic deletion.

The recorded TV program (i.e., the automatically or user recorded TV program) can be deleted if it is designated to be deleted by the user. As mentioned above, an automatically recorded TV program may be automatically deleted. When a TV program is deleted, it becomes a deleted TV program.

The TV apparatus 10 has, for example, a scheduling for viewing function, as well as the above-described scheduling for recording function. Scheduling for viewing is scheduling determined by the user for viewing a desired TV program. When a new TV program is thus scheduled for viewing, it is regarded as a scheduled-for-viewing TV program. The scheduled-for-viewing TV program is automatically displayed on the TV apparatus 10 during the broadcasting time period of the same.

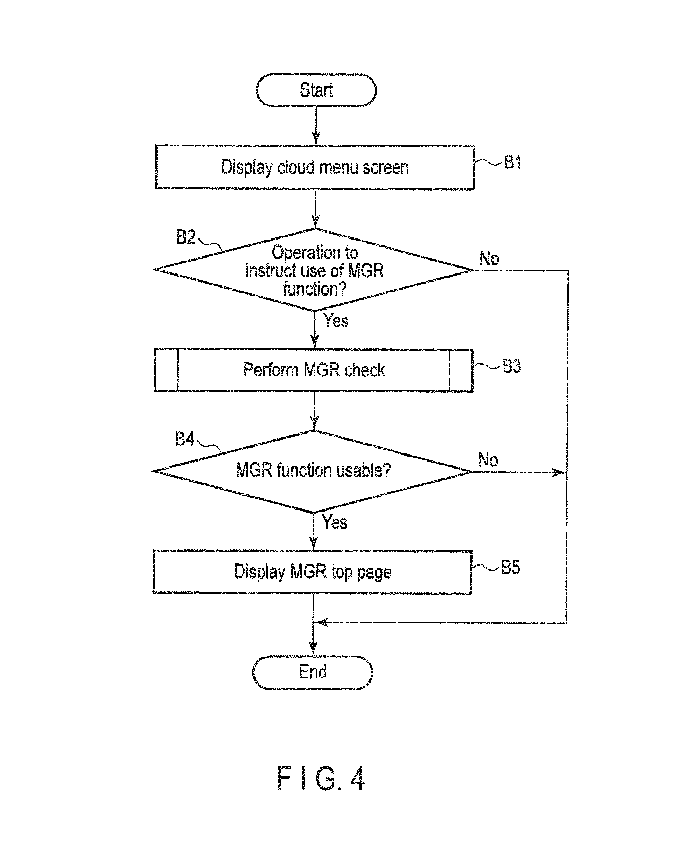

The view controller 142 shown in FIG. 2 performs processing of displaying the scheduled/recorded TV program list, using the above-mentioned MGR function, based on such a TV program state transition as described above. Referring now to FIG. 4, a description will be given of a procedure of processing by the view controller 142 for displaying the scheduled/recorded TV program list.

Firstly, when the user has requested a cloud service as described above, the cloud service application of the TV apparatus 10 is activated, whereby the view controller 142 displays the cloud menu screen image 100 shown in FIG. 1 (block B1).

At this time, the user can instruct the use of the MGR function on the cloud menu screen image 100, by operating the remote controller 20. More specifically, the user can instruct the use of the MGR function by selecting a widget corresponding to the MGR function displayed in the display area 104 on the cloud menu screen image 100 or designating a "media guide" button 105 on the cloud menu screen image 100. The use of the MGR function may be instructed by, for example, pressing a dedicated button incorporated in the remote controller 20.

The view controller 142 determines whether each of the above-described operations (hereinafter referred to as "instruction-of-use operations") for instructing the use of the MGR function has been accepted (block B2).

If it is determined that the instruction-of-use operation is not accepted (NO in block B2), the processing is finished, and the display on the cloud menu screen image 100 is maintained, for example.

In contrast, if it is determined that the instruction-of-use operation has been accepted (YES in block B2), a service provider (TV provider) selected by the user is set, and then MGR check processing is performed (block B3). The MGR check processing is pre-processing executed to use the MGR function. The MGR check processing will be described later in detail.

Subsequently, based on the MGR check processing, it is determined whether the MGR function can be used (block B4).

If it is determined that the MGR function cannot be used (NO in block B4), the processing is finished, whereby, for example, the cloud menu screen image 100 may be displayed again.

In contrast, if it is determined that the MGR function can be used (YES in block B4), the view controller 142 activates the MGR function (more specifically, an application for using the MGR function), thereby displaying an MGR top page (screen) (block B5). On the MGR top page, a list (i.e., the scheduled/recorded TV program list) of scheduled-for-recording TV programs and recorded TV programs managed and recorded in the TV apparatus 10 is displayed, for example.

In the scheduled/recorded TV program list, the scheduled-for-recording TV programs and recorded TV programs are arranged based on the content information (metadata) of each TV program. The content information is the information managed in, for example, the above-described time cloud service server 411, and can be obtained from the time cloud service server 411.

The content information includes time/date, and information (TV program information) associated with each TV program. For instance, the time/date included in the content information of a scheduled-for-recording TV program is that on which this TV program is to be recorded based on a recording schedule (i.e., the time/date at which the TV program is to be broadcasted). In contrast, the time/date included in the content information of a recorded TV program is that at which this TV program was recorded (i.e., the time/date at which the TV program was broadcasted). For convenience sake, the time/date at which this TV program is to be recorded based on the recording schedule may be referred to as the time/date of the scheduled-for-recording TV program, and that at which the TV program was recorded may be referred to as the time/date of the recorded TV program.

The TV program information further includes the title, the episode number (episode name), the performers' names, the outline, etc., of the TV program.

Once the MGR function is activated as described above, the setting of the service provider and the MGR check processing may be omitted when the MGR function is activated again.

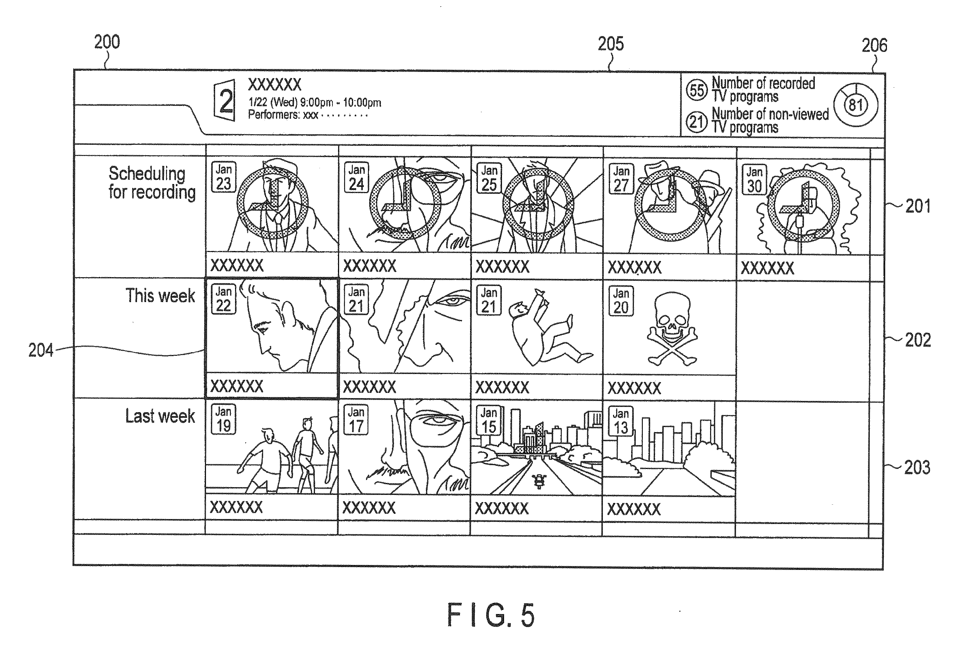

Referring now to FIG. 5, the MGR top page (the scheduled/recorded TV program list) displayed on the TV apparatus 10 will be described in detail.

On an MGR top page 200, a scheduled/recorded TV program list (first screen image) including both icons indicating a plurality of scheduled-for-recording TV programs, and icons indicating a plurality of recorded programs is displayed.

In the scheduled/recorded TV program list, the icons indicating scheduled-for-recording TV programs are arranged in time/date order of each scheduled-for-recording TV program (namely, in time/date order at which each scheduled-for-recording TV program is to be recorded based on the recording schedule). Further, the icons indicating recorded TV programs are arranged in time/date order of each recorded TV program (namely, in time/date order at which each recorded TV program was recorded). It is sufficient if the icons are, for example, images associated with the respective TV programs, and include images (such as thumbnail images indicating the TV programs) included in the TV programs. Further, as the icons of the TV programs, images acquired from, for example, various servers may be used, as well as the thumbnail images indicating the TV programs.

In the description below, the icons of the TV programs are supposed to be thumbnail images indicating the TV programs. As described above, the icons of the TV programs are displayed on the MGR top page 200 (the scheduled/recorded TV program list image). However, in the description below, there is a case where it is supposed for convenience sake that each TV program is displayed on the MGR top page 200. These icons (the icons of the scheduled-for-recording TV programs and the icons of the recorded TV programs) are arranged in a matrix.

More specifically, as shown in FIG. 5, the MGR top page 200 includes TV program display areas 201 to 203.

The TV program display area 201 is positioned above the other TV program display areas 202 and 203, and displays scheduled-for-recording TV programs (more specifically, displays the thumbnail images indicating the scheduled-for-recording TV programs). In the TV program display area 201, the scheduled-for-recording TV program whose recording time is the next is arranged in the leftmost position, and the other scheduled-for-recording TV programs are arranged on the right side of the mentioned one in the order of recording time closer to the present time. Namely, in the TV program display area 201, the scheduled-for-recording TV programs are arranged from the leftmost position in an increasing order of recording time.

In contrast, the TV program display areas 202 and 203 below the TV program display area 201 display past TV programs, i.e., already recorded TV programs (namely, display the thumbnail images indicating the recorded TV programs). More specifically, the TV program display area 202 displays the recorded TV programs whose recording dates fall within this week (namely, the recorded TV programs that were recorded this week). The TV program display area 203 displays the recorded TV programs whose recording dates fall within the last week (namely, the recorded TV programs that were recorded last week).

In the TV program display areas 202 and 203, the TV program whose recording time is the most recent is positioned in the leftmost position.

More specifically, in the TV program display area 202, the latest recorded TV program among the recorded TV programs that were recorded this week is arranged in the leftmost position, and the other recorded TV programs (that were recorded this week) are arranged on the right side of the leftmost one in the order of recording time. If there is a TV program currently being recorded, it is supposed that this TV program is arranged in the leftmost position of the TV program display area 202.

Similarly, in the TV program display area 203, the latest recorded TV program among the recorded TV programs that were recorded last week is arranged in the leftmost position, and the other recorded TV programs (that were recorded last week) are arranged on the right side of the leftmost one in the order of recording time.

Namely, in the TV program display areas 202 and 203, the recorded TV programs (that were recorded this week and last week) are arranged in a decreasing order of recording time.

As described above, in the scheduled/recorded TV program list of the embodiment, scheduled-for-recording TV programs and already recorded TV programs are displayed in different rows such that the scheduled-for-recording TV programs (i.e., further TV programs) are arranged in the upper row (area) 201, and the recorded TV programs (i.e., past TV programs) are arranged in the middle and lower rows (areas) 202 and 203. Further, in the TV program display area 201, the scheduled-for-recording TV programs are arranged such that the closer to the right end, the remoter from the present day, while in the TV program display areas 202 and 203, the recorded TV programs are arranged in a matrix such that the closer to the left end, the newer or the closer to the present day. In other words, in the scheduled/recorded TV program list, TV programs are arranged so that the scheduled-for-recording TV program whose recording time is the next is arranged close to the recorded TV program that was recorded latest.

This arrangement is based on such a point of view that in general, characters, for example, are written from left to right, and hence the user can easily determine intuitively which is more important, if more important things are arranged on the left side and non important things are arranged on the right side.

Further, as shown in FIG. 5, icons indicating the respective dates of the TV programs (namely, the respective dates on which TV programs will be recorded based on the recording schedule or were recorded) are displayed on the thumbnail images indicating the TV programs.

Further, although in the example of FIG. 5, the TV program display area 201 displays five TV programs (scheduled-for-recording TV programs), the sixth et seq. TV programs, if there is any, can be displayed by scrolling the TV program display area 201 laterally (leftwards). It is supposed that scrolling can be performed on a row basis (namely, on a TV program display area basis).

In addition, if, for example, scheduling for recording with respect to a scheduled-for-recording TV program is canceled, or if a recorded TV program is deleted from a recording device, such as an HDD, the thumbnail image indicating the TV program is deleted from the MGR top page 200 (namely, from the scheduled/recorded TV program list).

On the MGR top page 200 (the scheduled/recorded TV program list), the user can select (designate), for example, the TV program that the user wants to replay, or the TV program whose detailed information the user wants to confirm. The user can perform this program selection by operating the remote controller 20 to move a focus 204 to the target TV program (or the thumbnail image indicating the target TV program). In the example shown in FIG. 5, the focus 204 is set on the TV program situated in the leftmost position of the TV program display area 202. Although in the example of FIG. 5, the focus 204 is formed as a frame surrounding the thumbnail image indicating the TV program, it may have another shape. It is sufficient if the user can grasp which TV program is selected (focused).

When a TV program has been selected by thus moving the focus 204 (namely, by setting the focus 203 on the TV program), TV program information associated with the selected TV program (namely, the TV program with the focus 204) is displayed in a TV program information display area 205 provided in the upper portion of the MGR top page 200. More specifically, the TV program information display area 205 displays (the logo of) the channel corresponding to the selected TV program, and the title, the broadcast date (day of the week), and the broadcast start time and end time of the TV program. In the example of FIG. 5, information associated with the TV program with a title "xxxxxx" broadcasted on January 22 (Wednesday), 9:00 pm to 10:00 pm is displayed in the TV program information display area 205. The TV program information display area 205 may also display, for example, performers' names.

The thumbnail images indicating the respective TV programs displayed in the above-mentioned MGR top page 200, and the (content information including the) TV program information displayed in the TV program information display area 205, are obtained from the time cloud service server 411. Further, if there is no thumbnail image indicating a TV program, an image indicating, for example, the category of the TV program may be employed.

Moreover, a storage information display area 206 is provided in the upper right portion of the MGR top page 200. The storage information display area 206 displays the number of recorded TV programs and the number of those (non-viewed TV programs) of the recorded TV programs that are not yet viewed.

The storage information display area 206 also displays the ratio (%) of the capacity (i.e., the used capacity) of the storage (e.g., HDD) used for recording the TV programs. It is supposed that the used capacity of the storage displayed is the used capacity associated with the above-described user recording area.

In the example of FIG. 5, the number of recorded TV programs is 55, and the number of non-viewed TV programs included in them is 21. Further, the used capacity of the storage is 81%.

In addition, the storage information display area 206 may display, as well as the above, information indicating, for example, whether the automatic recording function is in the ON state or the OFF state, or information indicating an error state.

Although in the example of FIG. 5, only the TV program display areas 201 to 203 are displayed, the TV programs (recorded TV programs) that were recorded two weeks or more before can be displayed by scrolling the MGR top page 200 of FIG. 5 vertically (upwards).

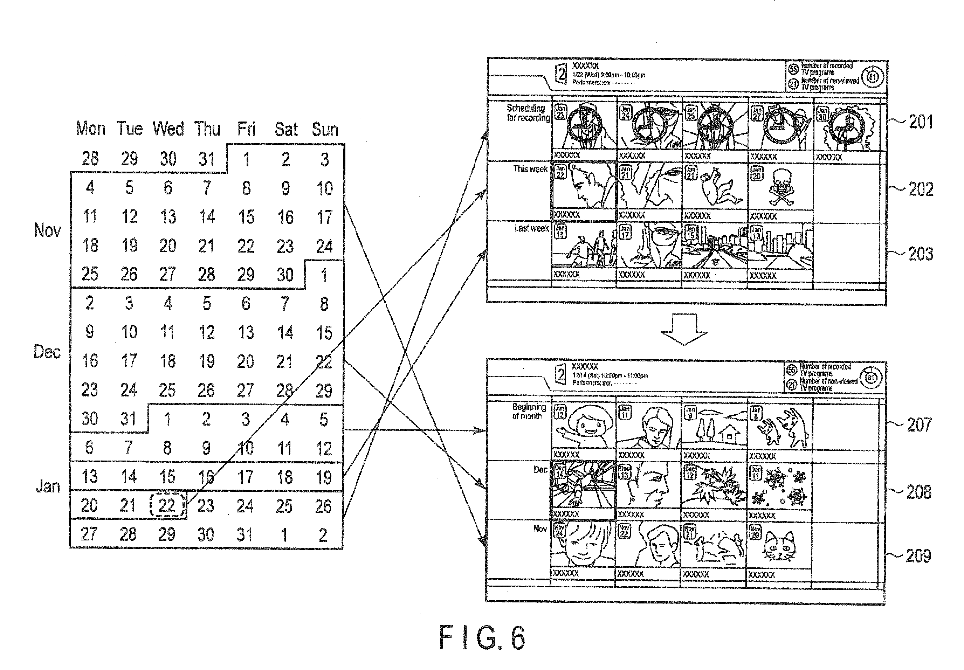

Referring then to FIG. 6, the display position of each TV program on the MGR top page 200 (the scheduled/recorded TV program list) will be described in detail.

It is supposed that the present day is January 22 (Wednesday). Further, it is defined in the embodiment that one week starts from Monday and ends on Sunday.

In this case, on the MGR top page 200, a scheduled-for-recording TV program scheduled to be recorded after the present day (e.g., January 22) is displayed in the TV program display area (corresponding to scheduling for recording) 201 positioned above the other TV program display areas. As described above, the scheduled-for-recording TV programs in the TV program display area are arranged from the leftmost position in an increasing order of recording time.

In contrast, the recorded TV programs that were recorded during the time period ranging from January 20 (Monday) to January 22 (present day) are displayed in the TV program display area (corresponding to this week) 202 provided just below the TV program display area 201. If there is a TV program currently being recorded, this TV program is displayed in the TV program display area 202.

Further, the recorded TV programs that were recorded during the time period ranging from January 13 (Monday) to January 19 (Sunday) are displayed in the TV program display area (corresponding to last week) 203 provided just below the TV program display area 202.

Yet further, the recorded TV programs that were recorded during the time period ranging from January 1 (Wednesday) to January 12 (Sunday) are displayed in a TV program display area (corresponding to the beginning of January) 207 provided just below the TV program display area 203. As described above, although on the MGR top page 200, three TV program display areas (e.g., the TV display areas 201 to 203), for example, are displayed as one screen image, TV program display areas 207 to 209, for example, are supposed to be able to be displayed by upwardly scrolling the MGR top page 200.

The recorded TV programs that were recorded during December are displayed in a TV program display area (corresponding to December) 208 just below the TV program display area 207.

Similarly, the recorded TV programs that were recorded during November are displayed in a TV program display area (corresponding to November) 209 just below the TV program display area 208.

The recorded TV programs in the TV program display areas 202, 203 and 207 to 209 are arranged from the leftmost position in a decreasing order of recording time.

The recorded TV programs that were recorded before October are supposed to be similarly displayed in a TV program display area corresponding to each month, although no detailed description is given thereof. Further, it is supposed that 12 TV program display areas corresponding to 12 months are prepared, and that the recorded TV programs that were recorded yet earlier (namely, one year or more before) are collectively displayed in the lowermost TV program display area on the MGR top page 200.

It is further supposed that if there are no recorded TV programs to be displayed in the TV program display areas corresponding to the beginning of the above-mentioned month (January) or each month before the above-mentioned month, these TV program display areas are omitted. More specifically, in the example of FIG. 6, if there are no recorded TV programs to be displayed in the TV program display area 207 corresponding to the beginning of the month, it is supposed that the TV program display area 208 is arranged just below the TV program display area 203.

Further, although in the examples of FIG. 6, the TV program display area 207 corresponding to the beginning of the month is provided, it is supposed that if the present day (e.g., January 8 (Wednesday)) is included in the anterior half of the month (i.e., falls within two weeks from the beginning of the month), the TV program display area 207 is not provided, and the TV program display area 208 is provided just below the TV program display area 203.

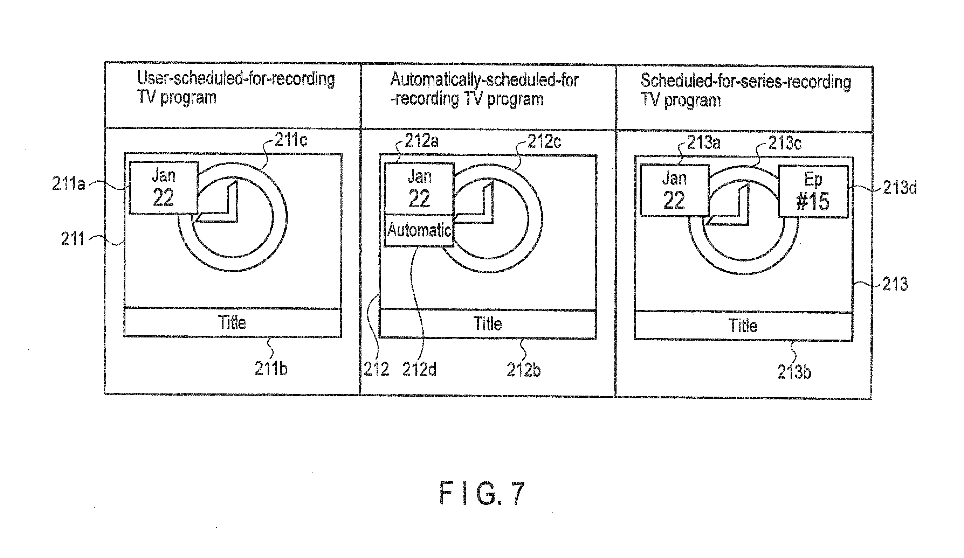

Referring then to FIGS. 7 to 9, a description will be given of the display forms of thumbnail images indicating TV programs displayed on the MGR top page 200.

FIG. 7 shows the display forms of thumbnail images indicating scheduled-for-recording TV programs. Regarding user scheduled-for-recording TV programs, scheduled-for-recording series TV programs (i.e., TV programs scheduled for recording as a series) are discriminated from the other user scheduled-for-recording TV programs. In the embodiment, the expression "scheduled-for-recording TV programs" implies user scheduled-for-recording TV programs other than the scheduled-for-recording series TV programs, for convenience sake.

In the user scheduled-for-recording TV program included in the examples of FIG. 7, an icon (hereinafter referred to as "the date icon") 211a indicating the date on which a user scheduled-for-recording TV program is scheduled to be recorded is displayed on the upper left portion of a thumbnail image 211. Further, a TV program title 211b is displayed on the lower portion of the thumbnail image 211. Yet further, a predetermined mark 211c informing the user that the TV program is a scheduled-for-recording TV program is displayed on the upper portion of the thumbnail image 211 representing the user scheduled-for-recording TV program. In the examples of FIG. 7, a mark indicating a clock is used as the predetermined mark 211c.

In the automatically-scheduled-for-recording TV program, a date icon 212a, a title 212b and a predetermined mark 212c are displayed on a thumbnail image 212 indicating this TV program, as in the above-mentioned user-scheduled-for-recording TV program. In addition, an icon 212d indicating that the TV program is an automatica1ly-scheduled-for-recording TV program is displayed on the thumbnail image 212 indicating the automatically-scheduled-for-recording TV program.

Also, in the scheduled-for-recording series TV program, a date icon 213a, a title 213b and a predetermined mark 213c are displayed on a thumbnail image 213 indicating the TV program, as in the above-mentioned user-scheduled-for-recording TV program and automatically-scheduled-for-recording TV program. Furthermore, an icon 213d indicating that the TV program is included in a series (i.e., this TV program is a scheduled-for-recording series TV program) is displayed on the thumbnail image 213 indicating that this TV program is the scheduled-for-recording series TV program. The icon 213d includes, for example, an icon indicating an episode number in the series.

In the above-described scheduled-for-recording TV programs (the user-scheduled-for-recording TV program, the automatically-scheduled-for-recording TV program and the scheduled-for-recording series TV program), the thumbnail images 211 to 213 are grayout-displayed, for example.

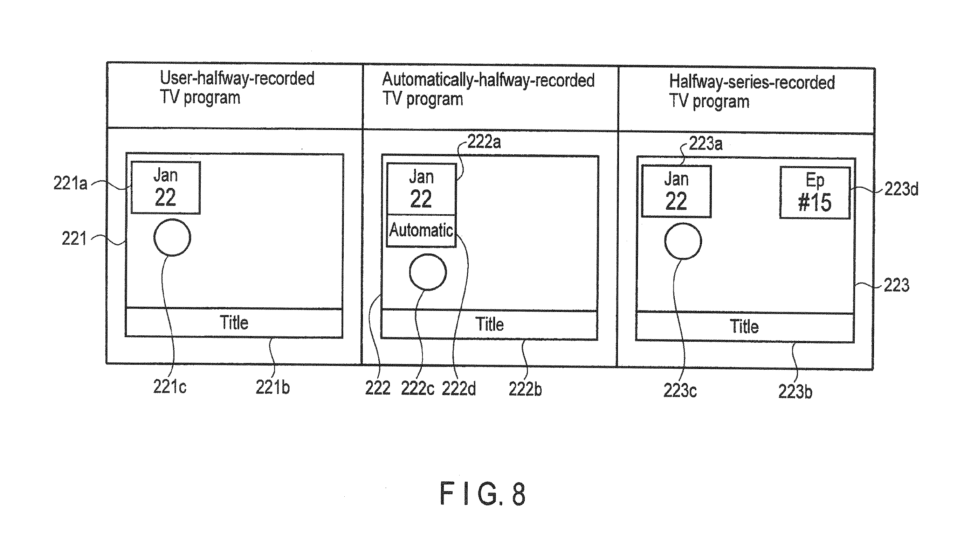

FIG. 8 shows the display forms of thumbnail images representing the programs currently being recorded. Regarding the TV programs (hereinafter referred to as "user-halfway-recorded TV programs") currently being recorded based on user scheduling for recording, user-halfway-recorded TV programs (hereinafter referred to as "halfway-recorded series TV programs") currently being recorded based on user scheduling for series recording are discriminated from the other user-halfway-recorded TV programs. In the described below, the expression "user-halfway-recorded TV programs" implies the halfway-recorded TV programs other than the halfway-recorded series TV programs, for convenience sake.

In the user-halfway-recorded TV program included in the examples of FIG. 8, an icon (date icon) 221a indicating the date of recording of this program is displayed on the upper left portion of a thumbnail image 221 representing the TV program. Further, a program title 221b is displayed on the lower portion of the thumbnail image 221. Yet further, an icon (hereinafter referred to as "the halfway-record icon") 221c informing the user that the TV program is currently being recorded is displayed on the upper portion of the thumbnail image 221 representing the user-halfway-recorded TV program. The halfway-record icon 221c includes, for example, a circular icon of red color.

In the automatically-halfway-recorded TV program, a date icon 222a, a title 222b and a halfway-record icon 222c are displayed on a thumbnail image 222 indicating this TV program, as in the user-halfway-recorded TV program. In addition, an icon 222d indicating that the TV program is an automatically-halfway-recorded TV program is displayed on the thumbnail image 222 indicating the automatically-halfway-recorded TV program. As the icon 222d, an icon similar to the icon 212d shown in FIG. 7 may be used.

Also in the halfway-recorded series TV program, a date icon 223a, a title 223b and a halfway-record icon 223c are displayed on a thumbnail image 223 indicating the TV program, as in the above-mentioned user-halfway-recorded TV program and automatically-halfway-recorded TV program. Furthermore, an icon 223d indicating that the TV program is included in a series (i.e., this TV program is a halfway-recorded series TV program) is displayed on the thumbnail image 223 indicating that this TV program is the halfway-recorded series TV program. The icon 223d includes, for example, an icon indicating an episode number in the series.

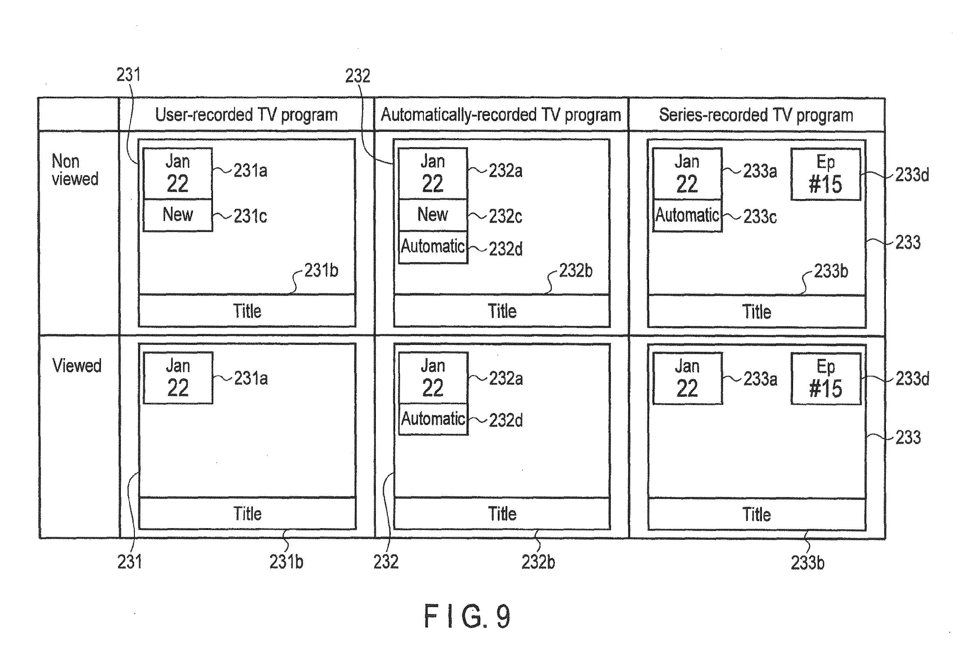

FIG. 9 shows the display forms of thumbnail images indicating the already recorded TV programs. Regarding the user recorded TV programs, the TV programs (recorded series TV programs) that were recorded based on scheduling for series recording are discriminated from the other user recorded TV programs. In the described below, the expression "user recorded TV programs" implies the user recorded TV programs other than the recorded series TV programs, for convenience sake.

In the user recorded TV program included in the examples of FIG. 9, an icon (date icon) 231a indicating the date of recording of this program is displayed on the upper left portion of a thumbnail image 231 representing the TV program. Further, a program title 231b is displayed on the lower portion of the thumbnail image 231 representing the TV program. Yet further, an icon (hereinafter referred to as "the non-view icon") 231c informing the user that the TV program is not yet viewed if the user recorded TV program is not yet viewed by the user (i.e., if the TV program is a non-viewed one) is displayed on the upper portion of the thumbnail image 231 representing the TV program. If the user recorded TV program is already viewed by the user (i.e., if the TV program is not the non-viewed one), no non-view icon 231c is displayed on the thumbnail image 231 representing the TV program.

In the automatically recorded TV program, a date icon 232a and a title 232b are displayed on a thumbnail image 232 representing this TV program, as in the above-mentioned user recorded TV program. In addition, if the automatically recorded TV program is not yet viewed, a non-view icon 232c is further displayed on the thumbnail image 232 representing this TV program. In contrast, if the automatically recorded TV program is already viewed, the non-view icon 232c is not displayed on the thumbnail image 232. Moreover, an icon 232d indicating that the TV program is an automatically recorded one is displayed on the thumbnail image 232 representing this TV program. As the icon 232d, an icon similar to the icon 212d of FIG. 7 may be used.

Also, in the recorded series TV program, a date icon 233a and a title 233b are displayed on a thumbnail image 233 representing the TV program, as in the above-mentioned user recorded TV program and the automatically recorded TV program. If the recorded series TV program is not yet viewed, a non-view icon 233c is further displayed on the thumbnail image 233 representing the TV program. In contrast, if the recorded series TV program is already viewed, the non-view icon 233c is not displayed on the thumbnail image 233. Yet further, an icon,233d indicating that the TV program is included in a series (i.e., it is a recorded series TV program) is displayed on the thumbnail image 233 representing the recorded series TV program. The icon 233d includes, for example, an icon indicating an episode number in the series.

As described above, in the recorded TV programs (the user recorded TV program, the automatically recorded TV program and the recorded series TV program), it can be easily detected from the non-view icon whether the recorded TV program is not yet viewed or is already viewed.

Although it is described in the embodiment that each thumbnail image displayed on the MGR top page 200 represents one TV program, a plurality of TV programs included in the same series (hereinafter, a series of TV programs) can be displayed using a single folder on the MGR top page 200. The series of TV programs displayed using the single folder include, for example, the above-mentioned scheduled-for-recording series TV programs, the halfway-recorded series TV programs and the recorded series TV programs.

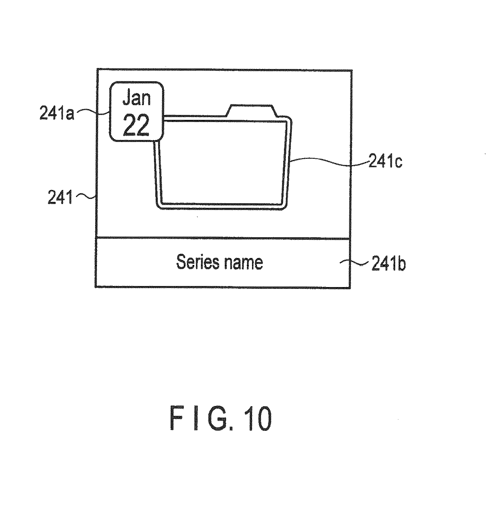

FIG. 10 shows a display form of a thumbnail image employed when displaying a series of TV programs using one folder. In the example of FIG. 10, an icon (date icon) 241a indicating the date on which the latest one of the recorded series TV programs was recorded, namely, indicating the most recent one of the recording dates of the TV programs, is displayed on the upper left portion of a thumbnail image 241 representing the TV program series. Further, a series name (the title of the TV program series) is displayed on the lower portion of the thumbnail image 241. Yet further, an icon (hereinafter, a folder icon) 241c for informing the user that the TV program is included in the series is displayed on the central portion of the thumbnail image 241 representing the series of TV programs.

If the series of TV programs includes a non-viewed recorded TV program, the above-mentioned non-view icon, for example, may be displayed although this is not shown in FIG. 10.

As described above, the date icon 241a indicating the date of recording of the latest recorded program among the series of TV programs is displayed on the thumbnail image 241. Namely, on the MGR top page 200 (the scheduled/recorded TV program list), (thumbnail images 241 representing) several series of TV programs are arranged based on the date (time and date) of the latest one of each series of TV programs.

Although in the embodiment, it is supposed that a series of TV programs displayed by one folder includes TV programs (i.e., scheduled-for-recording series TV programs, halfway-recorded series TV programs and recorded series TV programs) based on one scheduling for series recording, they may include, for example, TV programs of the same title regardless of existence or non-existence of scheduling for series recording. The series of TV programs may also include TV programs based on automatic scheduling for recording (i.e., automatically-scheduled-for-recording TV programs, automatically-halfway-recorded TV programs and automatically recorded TV programs). More specifically, if in, for example, a series of TV programs, such as a series of drama, first several episodes were recorded based on automatic scheduling for recording, and the other several episodes were recorded by user scheduling for series recording, the automatically recorded TV programs and the recorded TV program series may be set collectively as a series of TV programs.

Moreover, although in the embodiment, it is supposed that the date icon 241a indicating the date of the latest recorded TV program is displayed on the thumbnail image 241 representing a series of TV programs, it can be constructed such that when, for example, a halfway-recorded (i.e., currently recorded) TV program is included in a series of TV programs, a date icon 241a indicating the date of the currently recorded TV program is displayed, and (the thumbnail image 241 representing) the series of TV programs is arranged based on this date.

In addition, since the position of the thumbnail image 241, representing a series of TV programs, on the MGR top page 200 (scheduled/recorded TV program list) differs depending upon the date indicated by the date icon 241a displayed on the thumbnail image 241, the date indicated by the date icon 241a can be changed in accordance with the state of the series of TV programs.

Specifically, if a TV program included in a series of TV programs which was previously broadcasted without being recorded but will be re-broadcasted is scheduled for recording, arrangement may be made based on the date (time and date) on which this TV program is to be recorded based on the scheduling for recording.

Further, when (the thumbnail image 241 representing) a series of TV programs has been selected by moving the focus 204 on the MGR top page 200, the TV program information display area 205 provided on the upper portion of the MGR top page 200 displays the TV program information associated with the series of TV programs. As the broadcast date and the broadcast start time and end time in this case, the broadcast date and the broadcast start time and end time of the latest recorded TV program in the above-mentioned series of TV programs may be displayed, or the entire broadcast period of the series of TV programs, for example, may be displayed.

The user can move the focus 204 set on a TV program on the above-described MGR top page 200, by operating the remote controller 20. The remote controller 20 used to move the focus 204 on the MGR top page 200 will be described.

The remote controller 20 is provided with, for example, a cursor key, a decision button, a return button, a page key up/down button, a page key right/left button, an Exit button, a home button, an MGR button, a replay button, etc.

The cursor key includes up, down, left and right keys that are used to move, in the corresponding directions, the focus 204 displayed on the MGR top page 200. For instance, when the user has pressed the "up" cursor key, the focus 204 is set on the TV program positioned immediately above the current position.

If the "left" cursor key has been pressed where the focus 204 is set on the leftmost TV program among the TV programs displayed in each TV program display area on the MGR top page 200, the focus 204 is set on the rightmost TV program in said each TV program display area. Similarly, if the "right" cursor key has been pressed where the focus 204 is set on the rightmost TV program among the TV programs displayed in each TV program display area on the MGR top page 200, the focus 204 is set on the leftmost TV program in said each TV program display area. Although in the embodiment, the focus 204 is supposed to be moved in the same TV program display area, this may be modified such that if the "left" cursor key has been pressed where the focus 204 is set on the leftmost TV program in a certain TV program display area, the focus 204 is set on the rightmost TV program in the TV program display area positioned immediately above the certain TV program display area. Similarly, if the "right" cursor key has been pressed where the focus 204 is set on the rightmost TV program among the TV programs displayed in a certain TV program display area, the focus 204 may be set on the leftmost TV program positioned in the TV program display area immediately below the certain TV program display area.

Further, if the "down" cursor key has been pressed where the focus 204 is set on a TV program positioned in the lowermost TV program display area (corresponding to, for example, one year or more before) on the MGR top page 200, the focus 204 is set on a TV program positioned in the uppermost TV program display area (corresponding to, for example, scheduling for recording). Similarly, if the "up" cursor key has been pressed where the focus 204 is set on a TV program positioned in the uppermost TV program display area (corresponding to, for example, scheduling for recording) on the MGR top page 200, the focus 204 may be set on a TV program positioned in the lowermost TV program display area (corresponding to, for example, one or more before).

The decision button is used to display a pop-up corresponding to the TV program selected using the focus 204 on the MGR top page 200 (namely, the TV program on which the focus 204 is set). If a TV program other than the above-mentioned series of TV programs has been selected and the decision button has been pressed, a TV program detail pop-up including TV program information corresponding to the selected TV program is displayed. In contrast, if a series of TV programs has been selected (i.e., a series TV program folder has been selected) and the decision button has been pressed, a pop-up for the series of TV programs (hereinafter referred to as "the series folder pop-up") is displayed. The TV program detail pop-up and the series folder pop-up will be described later in detail.

If an automatically recorded TV program has been automatically deleted while the MGR top page 200 is being displayed, it is possible that the thumbnail image corresponding to the deleted TV program may be kept displayed on the MGR top page 200. In this case, if the thumbnail image corresponding to the deleted TV program has been selected and the decision button has been pressed, it is supposed that an error signal is output.

The return button is used to return to a previous state. For instance, if the return button has been pressed while each above-mentioned pop-up is being displayed, the pop-up is closed and the screen image is returned to the MGR top page 200.

The page key up/down button is used to collectively switch a plurality of TV program display areas (e.g., three TV display areas) included in one screen image. More specifically, referring to FIG. 6, if, for example, the page key down button has been pressed with the TV program display areas 201 to 203 of the MGR top page 200 displayed as one screen image, TV program display areas 207 to 209 positioned below the TV program display areas 201 to 203 are displayed as one screen image. When the TV program display areas 207 to 209 have been displayed by thus pressing the page key down button, the focus 204 is set on, for example, the leftmost TV program in the TV program display area 207. In contrast, if the page key up button has been pressed where, for example, the TV program display areas 207 to 209 are displayed as one screen image on the MGR top page 200, the TV program display areas 201 to 203 positioned above the TV program display areas 207 to 209 are displayed as one screen image. When the TV program display areas 201 to 203 have been displayed by thus pressing the page key up button, the focus 204 is set on, for example, the leftmost TV program in the TV program display area 203.

The page key right/left button is used to collectively switch (thumbnail images indicating) a plurality of TV programs displayed as one screen image in one TV program display area. When the page key right button has been pressed where, for example, five TV programs are displayed as one screen image in the TV program display area 201 as shown in FIG. 5, further TV programs (e.g., five TV programs) positioned on the right side of the five TV programs are displayed. The same can be said of the page key left button. The TV program display areas as the operation targets of the page key right/left button include the TV program on which the focus 204 is set.

The Exit button is used to finish the application for utilizing the above-described MGR function.

The home button is used to move to such a home screen as the above-described cloud menu screen 100 shown in FIG. 1.

The MGR button is used to perform switching, for example, between the MGR top page 200, video full-screen display, etc. The MGR button can also be used to instruct the TV apparatus 10 to use the above-described MGR function.

The replay button is used to replay, for example, the recorded TV program (content) with the focus 204 set thereon. If the focus 204 is set on a series of TV programs (a series TV program folder), the replay button is supposed to be invalid (namely, replay is not performed).

The remote controller 20 also includes a fast-forward button, a fast-rewind button, a pause button, etc., as buttons used for replaying recorded TV programs.

The pop-up corresponding to the TV program selected on the MGR top page 200 using the focus 204 will be described. As described above, the pop-up is displayed when the user has pressed the decision button on the remote controller 20, with the focus 204 set on the TV program on the MGR top page 200.

More specifically, a description will be given of the TV program detail pop-up (third screen image) displayed when a TV program other than the above-mentioned series of TV programs has been selected and the decision button has been pressed, and the series holder pop-up (second screen image) displayed when the series of TV program series (a series TV program folder) has been selected and the decision button has been pressed.

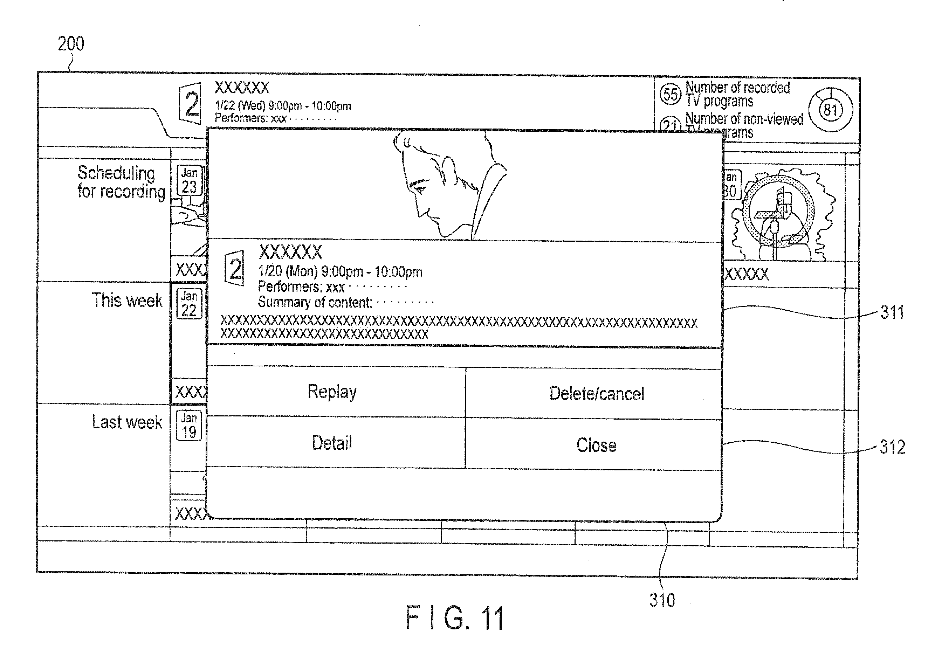

FIG. 11 shows an example of the TV program detail pop-up. In the description below, the TV program selected when the TV program detail pop-up shown in FIG. 11 has been displayed will be referred to as "the target TV program." In this description, the target TV program is supposed to be a user recorded TV program.

As shown in FIG. 11, a TV program detail pop-up 310 is displayed on the MGR top page 200. The TV program detail pop-up 310 includes a TV program detail display area 311 and an action button area 312.

The TV program detail display area 311 displays an image (thumbnail image) representing a target TV program, and TV program information corresponding to the target TV program. The TV program information displayed in the TV program detail display area 311 includes further detailed information, such as the outline of the target TV program, in addition to the information (the logo of the channel of the target TV program, the title, the broadcast date, the broadcast start time, the broadcast end time, the performers' names, and the like, of the target TV program) displayed in the TV program information display area 205 provided on the upper portion of the MGR top page 200.

The action button area 312 displays buttons (hereinafter referred to as "the action buttons") for executing various actions. In the example shown in FIG. 11, a "Replay" button, a "Delete/cancel" button, a "Detail" button and a "Close" button are displayed in the action button area 312.

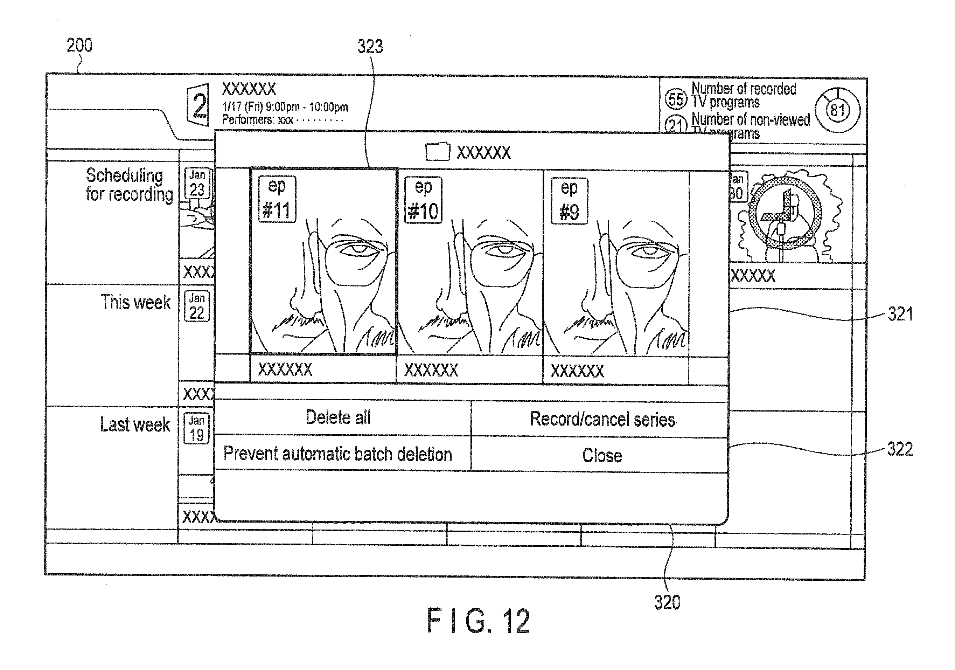

FIG. 12 shows an example of a series folder pop-up. In the description below, the series of TV programs selected when the series folder pop-up shown in FIG. 12 is displayed will be referred to as "the target series of TV programs."

As shown in FIG. 12, a series folder pop-up 320 is displayed on the MGR top page 200 like the TV program detail pop-up 310. The series folder pop-up 320 includes a TV program series display area 321 and an action button area 322.

The upper portion of the TV program series display area 321 displays the title (series name) of the target series of TV programs, and the thumbnail images representing the target series of TV programs with icons indicating episode numbers, the thumbnail images being arranged in a decreasing order of episode number, with the thumbnail image of the highest episode number set as the leftmost one. Although in the example of FIG. 12, TV programs included in a target series of TV programs and having episode numbers 11 to 9 are displayed, (the thumbnail images of) other TV programs having, for example, episode numbers 8 et seq. in a decreasing order can be displayed by laterally (leftwards) scrolling the TV program series display area 321. The TV programs of the target series of TV programs displayed in the TV program series display area 321 include scheduled-for-recording series TV programs, halfway-recorded series TV programs and recorded series TV programs.

In the TV program series display area 321, a focus 323 is provided on a TV program included in a target series of TV programs, as in the above-described MGR top page 200. If the user has pressed the decision button of the remote controller 20, with the focus 323 set on a particular TV program (hereinafter referred to as "the series-constituting TV program") constituting part of a target series of TV programs, the TV program detail pop-up corresponding to the series-constituting TV program is displayed. The displayed TV program detail pop-up is the same as that described referring to FIG. 11.

The action button area 322 displays buttons (action buttons) for executing various actions. In the example of FIG. 12, the action button area 322 displays an "Delete all" button, a "Record/cancel series" button, an "Prevent automatic-batch-deletion" button and a "close" button.

As described above, the series folder pop-up is supposed to be displayed when (the thumbnail image indicating) a series of TV programs displayed by one folder has been selected and the decision button has been pressed. For instance, it is supposed that a series of TV programs is not displayed by one folder, but each series-constituting TV program that constitutes the series of TV programs is displayed on the MGR top page 200. In this case, the above-mentioned series folder pop-up may be displayed when the user has selected one series-constituting TV program has selected, and then has pressed the decision button.

As shown in FIGS. 11 and 12, different (types of) action buttons are used between the TV program detail pop-up 310 and the series folder pop-up 320. Further, although referring to FIGS. 11 and 12, only the user recorded TV programs and the series of TV programs have been described, different action buttons are used in accordance with the state of the TV program selected when the pop-up is displayed.

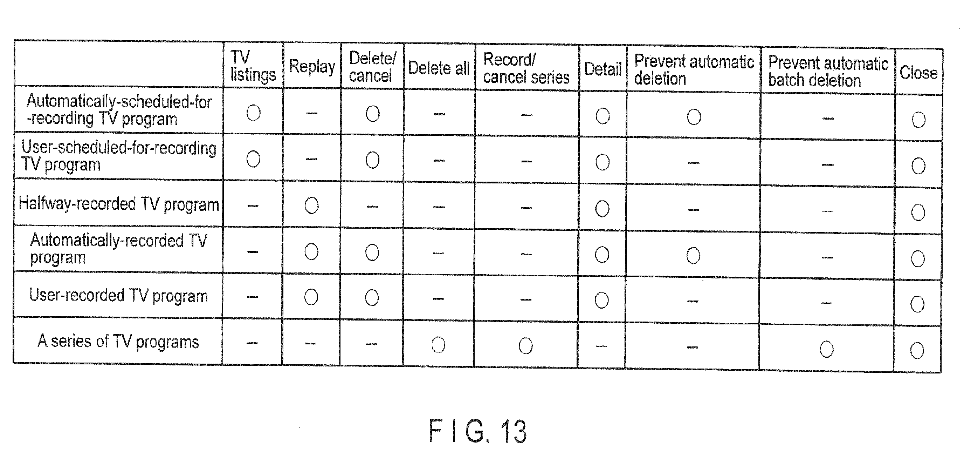

FIG. 13 shows examples of action buttons displayed in accordance with respective TV program states. As shown in FIG. 13, the action buttons include, for example, a "TV listings" button, a "Replay" button, a "Delete/cancel" button, an "Delete all" button, a "Record/cancel series" button, a "Detail" button, an "Prevent automatic-deletion" button, an "Prevent automatic-batch-deletion" button and an "Close" button.

The "TV listings" button is used to display a TV listings (EPG grid). The "Replay" button is used to replay the TV program (recorded TV program) selected when the TV program detail pop-up is displayed.

The "Delete/cancel" button is used to cancel scheduling for recording if, for example, the TV program selected when the TV program detail pop-up is displayed is a scheduled-for-recording TV program. The "Delete/cancel" button is also used to delete a recorded TV program (an automatically recorded TV program or a user recorded TV program) from a storage device, such as an HDD, if, for example, the TV program selected when the TV program detail pop-up is displayed is the recorded TV program.

The "Delete all" button is used to delete, for example, all TV programs included in the series of TV programs selected when the series folder pop-up is displayed.

The "Record/cancel series" button is used, for example, to perform scheduling for recording the series of TV programs selected when the series folder pop-up is displayed. The "Record/cancel series" button is also used to cancel scheduling for series recording if, for example, the series of TV programs selected when the series folder pop-up is displayed is scheduled for series recording. Further, it is supposed that even when the scheduling for series recording has been canceled by pressing the "Record/cancel series" button, the series of TV programs is kept to be displayed by one folder on the MGR top page 200 (namely, the folder of the series of TV programs is not deleted).

The "Detail" button is used to display the detail of, for example, the TV program selected when the TV program detail pop-up is displayed. It is supposed that the displayed detail of the TV program is more detailed than the information displayed in the program detail display area 311 shown in FIG. 12.

The "Prevent automatic-deletion" button is used to set a function of preventing the above-mentioned automatic deletion, if the TV program selected when, for example, the TV program detail pop-up is displayed is an automatically-scheduled-for-recording TV program or an automatically recorded TV program. Namely, when this "Prevent automatic-deletion" button has been pressed, the automatically-scheduled-for-recording TV program and the automatically recorded TV program are protected from automatic deletion.

The "Prevent automatic-batch-deletion" button is used to set a function of preventing the above-mentioned automatic deletion of (all series-constituting TV programs of) the series of TV programs selected when, for example, the series folder pop-up is displayed.

The "Close" button is used to close the TV program detail pop-up or the series folder pop-up.

In the example shown in FIG. 13, if the TV program selected when, for example, a pop-up is displayed is an automatically-scheduled-for-recording TV program, the pop-up (i.e., the action button area 312 of the TV program detail pop-up 310) displays the "TV listings" button, the "Delete/cancel" button, the "Detail" button, the "Prevent automatic-deletion" button and the "Close" button.

The above description made in association with the case where the TV program selected when a pop-up is displayed is an automatically-scheduled-for-recording TV program can also be applied to the other cases. Therefore, the other cases will not be described in detail.

Although in the example of FIG. 13, the "Replay" button, for example, is not displayed in the case of the automatically-scheduled-for-recording TV program or the user-scheduled-for recording TV program, it may be displayed in a gray-out manner.

In the embodiment, the display of the above-mentioned pop-ups (the TV program detail pop-up and the series folder pop-up) enables the user to confirm, for example, TV program information associated with the TV program selected on the MGR top page 200 using the focus 204.

The focus 204 on the MGR top page 200 will then be described in detail. In the embodiment, in a default state (namely, at the time of transition to the MGR top page 200), in order for the user to intuitively grasp an important TV program (e.g., a latest recorded TV program) as described above, the focus 204 is displayed on the recorded TV program whose recording time is most recent (i.e., the leftmost recorded TV program in the TV program display area 202 of FIG. 5).

Further, as described above, the focus 204 can be moved by user's operation of the remote controller 20. If, for example, transition is made from the MGR top page 200 to another screen image (e.g., a content replay screen, the cloud menu screen 100, or various pop-ups) after the focus 204 is moved, the TV program with the focus 204 set thereon (namely, the destination position of the focus 204) is stored in a TV apparatus 10.

In the embodiment, if the MGR top page 200 (i.e., the scheduled/recorded TV program list) is again displayed after the TV program (hereinafter, a focused TV program) to which the focus 204 is moved as aforementioned is stored, the way of display of the scheduled/recorded TV program list can be changed in accordance with the focused TV program (i.e., the position of the focus 204). In this case, the MGR top page 200 displays the scheduled/recorded TV program list so that the focused TV program is set (displayed) in a predetermined position.

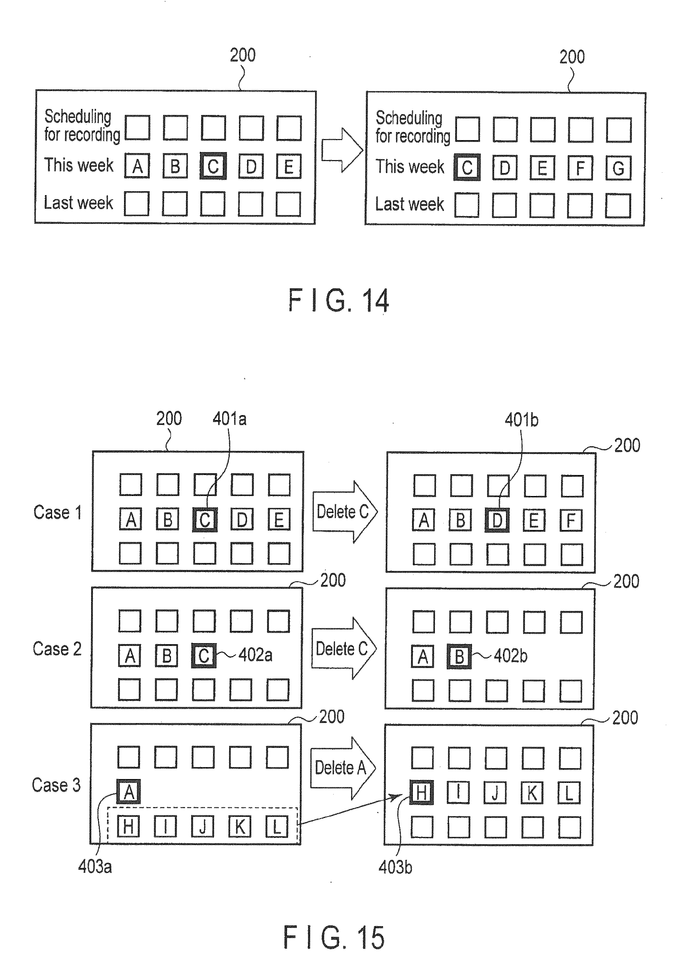

Referring now to FIG. 14, this will be described in detail. Firstly, suppose that TV programs A to E are arranged in order from the left in the TV program display area corresponding to this week. In this case, it is supposed that the focus 204 is moved to the TV program C.

At this time, if the screen image is changed from the MGR top page 200 to another screen image, the TV program C is stored as the focused TV program.

After that, if the MGR top page 200 has been again displayed, the scheduled/recorded TV program list is displayed so that the focused TV program C is positioned in the leftmost position in a second TV program display area from the above (this is a TV program display area corresponding to this week). In this case, as shown in FIG. 14, in the TV program display area corresponding to this week on the MGR top page 200, TV programs C to G are arranged in order from the left. Further, in this case, the TV programs A and B are displayed when the TV program display area corresponding to this week is scrolled to the right.

Although in the example of FIG. 14, the TV program C displayed in the TV program display area corresponding to this week is the focused TV program, the same description as the above can be given of the case where, for example, a TV program displayed in any other TV program display area is the focused TV program.

In the embodiment, when the MGR top page 200 is displayed again, the scheduled/recorded TV program list is displayed so that the focused TV program is positioned at the leftmost end of the second TV program display area, whereby the user can intuitively grasp the focused TV program (i.e., the TV program noticed before transition to another screen image).

Although it is supposed in the embodiment that when the MGR top page 200 is displayed again after the focused TV program is stored, the scheduled/recorded TV program list is displayed so that the focused TV program is positioned in a predetermined position, this way of display may be applied when a screen image other than the MGR top page 200. More specifically, if there is a function of displaying a list of those of all TV programs displayed on the MGR top page 200, which belong to a particular category (this list will hereinafter be referred to as "the category list"), the focused TV program may be displayed in a predetermined position in the list. However, when the category list is displayed, there is a case where the focused TV program does not belong to a target category and is therefore not displayed in the list. In this case, the focus may be set on a recorded TV program, which is included in a plurality of TV programs in a particular category list and whose recording time is most recent.

When, as described above, a TV program detail pop-up has been displayed in associated with the TV program on which the focus 204 is set, if the user has pressed the "Delete/cancel" button displayed in (the action button area of) the TV program detail pop-up, the TV program will be deleted form the storage device and also from the MGR top page 200 (scheduled/recorded TV program list).

Referring to FIG. 15, a description will be given of a TV program on which the focus 204 will be newly set, after the TV program on which the focus 204 is previously set is deleted. Specifically, cases 1 to 3 will be described.

Firstly in the case 1 where TV programs A to E are displayed from the left in a particular TV program display area, the TV program C (401a) is supposed to be deleted as shown in FIG. 15. If the TV program C (401a) has been deleted, the focus 204 may be set on the TV program D (401b). Namely, when a TV program has been deleted, it may be a basic rule to maintain the focus position on the MGR top page 200 (scheduled/recorded TV program list), and to set the focus 204 on a subsequent TV program (i.e., the TV program on the right side of the deleted one).

Secondly, in the case 2, it is supposed that no TV program exists in a particular TV program display area on the right side of the TV program C (402a) that is to be deleted, as shown in FIG. 15. In this case, if the TV program C (402a) has been deleted, the focus 204 may be set on the TV program B (402b). Thus, if no TV program exists on the right side of the deleted TV program (namely, if the position of the focus 204 cannot be maintained), the focus 204 may be set on the TV program immediately before the deleted TV program (namely, on the TV program on the left side of the deleted TV program).

Thirdly, in the case 3, it is supposed that only one TV program A (403a) exists in a particular TV program display area, and is deleted as shown in FIG. 15. In this case, if the TV program A (403a) has been deleted, the focus 204 may be set on a TV program H (403b). Thus, when only the TV program to be deleted is displayed in a TV program display area, if this program has been deleted, this display area itself is deleted, and the TV program display area immediately below the display area of the deleted TV program is moved upward (in this case, the TV program display area displaying TV programs H to L is moved upward). Further, in this case, the focus 204 may be set on the TV program positioned at the leftmost end of the TV program display area moved upward to the deleted display area.

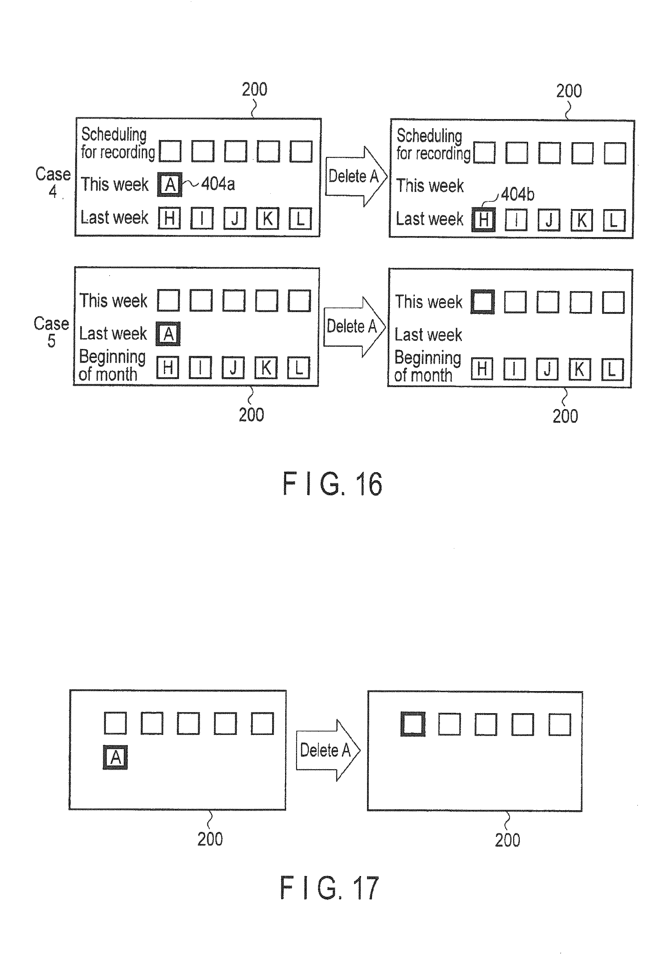

If only one TV program is displayed in a TV program display area, and if it has been deleted, the display area itself is also deleted, as is described above. It is supposed, however, that if the display area is an area for scheduling for recording, or corresponds to this week or last week, it will not be deleted as shown in FIG. 16.

If the TV program A (404a) displayed in the TV program display area corresponding to this week has been deleted as shown in case 4 of FIG. 16, the focus 204 may be set on the TV program H (404b) positioned at the leftmost end of the TV program display area corresponding to last week. Namely, the case 4 of FIG. 16 supposes that all TV programs are deleted from the TV program display area corresponding to scheduling for recording, this week or last week, and there is no TV program that can be replayed (i.e., there is no recorded TV program), in the TV program display area immediately above the first-mentioned TV program display area (hereinafter referred to as "the empty TV program display area"). In this case, the focus 204 may be displayed on the TV program positioned at the leftmost end of the TV program display area (corresponding to last week in this case) provided immediately below the empty TV program display area. Namely, as a target TV program on which the focus 204 is to be set, a recorded TV program (i.e., a TV program that can be replayed) takes priority over a scheduled-for-recording TV program.

If a TV program that can be replayed exists in the TV program display area immediately above the empty TV program display area, as shown in the case 5 of FIG. 16, that the focus 204 is set on the TV program positioned at the leftmost end of the TV program display area (corresponding to this week in this case) provided immediately above the empty TV program display area (corresponding to last week in this case).

Further, as shown in FIG. 17, if the TV program display area provided at, for example, the bottom of the MGR top page 200 becomes an empty TV program display area, this area is deleted, and the TV program positioned at the leftmost end of the TV program display area immediately above the deleted display area becomes the focused TV program.

In the embodiment, even if the TV program on which the focus 204 is set has been deleted, the focus 204 can be appropriately set on another TV program, as described above.

The movement (change) of the position of the focus 204 in accordance with the deletion of a TV program has been described so far. The scheduled/recorded TV program list on the MGR top page 200 is changed also in accordance with the transition of a TV program other than the deletion of the same. More specifically, it is supposed, for example, that a scheduled-for-recording TV program on the MGR top page 200 has been recorded based on scheduling for recording, with the focus 204 set thereon. In this case, the scheduled-for-recording TV program becomes a recorded TV program, and (the thumbnail image representing) the scheduled-for-recording TV program is moved from the TV program display area corresponding to scheduling for recording to the TV program display area corresponding to this week. At this time, the focus 204 is set on the TV program moved to the TV program display area corresponding to this week. Namely, unlike the above-described TV program deletion, the focus 204 set on a TV program is kept thereon even if the state of the TV program has shifted, as far as the TV program exists in the scheduled/recorded TV program list.

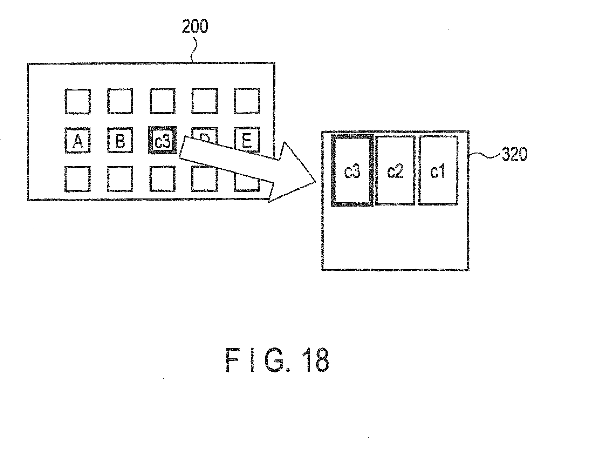

Further, in the embodiment, the focus 323 in the above-described series folder pop-up is also controlled so that it can be set in a position (on a TV program) that the user can intuitively grasp. For instance, a series of TV programs C is formed of, for example, a plurality of series-constituting TV programs including series-constituting TV programs c1 to c3, and it is supposed that, for example, the series-constituting TV program c3 individually displayed on the MGR top page 200 has been selected, and the decision button has been pressed. In the series folder pop-up 320 displayed in this case, the series-constituting TV program c3 is arranged at the leftmost end, the focus 323 is set on the program c3, as is shown in FIG. 18. By virtue of this structure, the user can grasp the TV program selected to display the series folder pop-up 320, and can easily perform a subsequent operation.

In the case of the series folder pop-up 320 displayed not when, for example, a series-constituting TV program has been selected and the decision button has been pressed, but when a series of TV programs (a series TV program folder) has been selected and the decision button has been pressed, the newly recorded TV program is arranged at the leftmost end, and then the focus 323 is set on this TV program. After the series folder pop-up 320 is once displayed, the TV program on which the focus 323 is set is stored. Thus, when the series folder pop-up 320 is again displayed, the focus 323 can be set on the stored TV program after the TV program is arranged at the leftmost end.

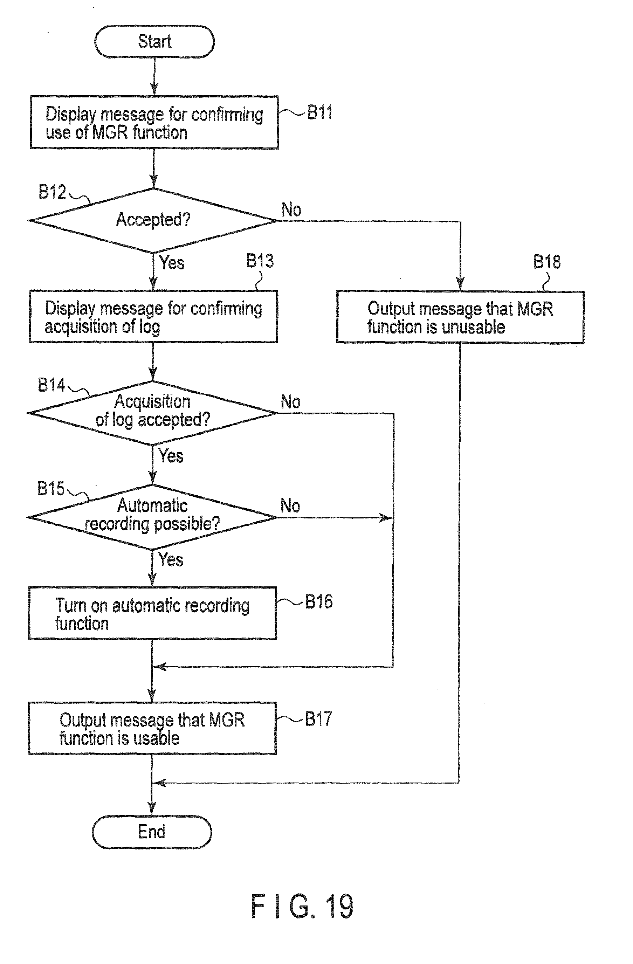

Referring then to the flowchart of FIG. 19, a description will be given of a procedure of the above-mentioned MGR check processing (i.e., processing in block B3 in FIG. 4). The MGR check processing is preprocessing performed to utilize the MGR function, and is executed when the above-mentioned instruction-of-use operations has been accepted.

In the MGR check processing, the view controller 142 displays a MGR use confirmation message (block B11). The MGR use confirmation message is used to ask the user whether to use the MGR function. As the "MGR use confirmation message," such a message as "At present, the MGR function is inactive," followed by "Do you want to activate the MGR function?" is displayed.

Further, an Yes button and a No button are displayed near the MGR use confirmation message. The user can press the Yes button if they accept the use of the MGR function, and can press the No button if they do not accept the use of the MGR function.

For facilitating user's judgment as to whether to use the MGR function, the demonstration screen image, for example, of the MGR top page 200 may be displayed in addition to the above-mentioned MGR use confirmation message.

Subsequently, it is determined, based on the button pressed by the user, whether the use of the MGR function has been accepted (block B12).

If it is determined that the use of the MGR function has been accepted (i.e., if the above-mentioned YES button has been pressed) (Yes in block B12), processing for turning on or off the above-described function (automatic scheduling-for-recording function) for performing automatic scheduling for recording is executed in blocks B14 to B16 below.

At this time, the view controller 142 displays a log acquisition confirmation message (block B13). The log acquisition confirmation message is a message for asking the user whether to allow acquisition of a log. The log is used for the above-described automatic scheduling for recording, and is data collected, for example, in the log collection server 412.

Further, near the log acquisition confirmation message, allowance and rejection buttons, for example, are displayed. If the user allows log acquisition, they press the allowance button, whereas if they reject the log acquisition, they press the rejection button.

Based on the button pressed by the user, it is determined whether the log acquisition has been allowed (block B14).

If it is determined that the log acquisition has been allowed (namely, that the allowance button has been pressed) (Yes in block B14), it is determined whether automatic scheduling for recording can be performed in the TV apparatus 10 (i.e., whether automatic recording is possible) (block B15). The processing in block B15 includes system check of the TV apparatus 10 as to whether automatic recording is possible. In this case, it is checked whether the TV apparatus 10 is connected to a storage device (e.g., an HDD) necessary to, for example, perform recording based on automatic scheduling for recording.

If it is determined that automatic recording is possible (Yes in block B15), the automatic recording function is turned on (block B16). Thus, automatic scheduling for recording is executed in the TV apparatus 10.

Upon executing the processing of block B16, a check result indicating that the MGR function can be used is output (block B17), thereby displaying the MGR top page 200 as described with reference to FIG. 4.

In contrast, if it is determined that the use of the MGR function is not accepted (i.e., if the above-mentioned NO button has been pressed) (No in block B12), a check result indicating that the MGR function cannot be used is output. In this case, the MGR top page 200 is not displayed as described with reference to FIG. 4.

Further, if it is determined that the log acquisition has not been allowed (No in block B14), or if it is determined that automatic recording is impossible (No in block B15), the processing of block B16 is not executed to thereby set the automatic recording function in the off state.

Even when the automatic recording function is set in the off state, the check result indicating that the MGR function can be used is output in block B17. In this case, the MGR top page 200 is displayed as mentioned above, but automatic scheduling for recording is not performed.

Furthermore, if it is determined in block B15 that automatic recording is impossible because, for example, the HDD is not connected to the TV apparatus 10, a warning message for stimulating connection of the HDD to the TV apparatus 10 may be output. If the HDD is connected to the TV apparatus 10 by this message, the MGR check processing may be executed again.

A description will now be given of the case where a recorded TV program (content), for example, is replayed in the TV apparatus 10 according to the embodiment.

The TV apparatus 10 of the embodiment can be used by each family member, if the above-described common log-in identifier (common ID) is used as a family ID for all family members.

The family members may include a child. In this case, depending upon the content of the recorded TV program, viewing (replay) of the TV program may be wanted to be limited.

In light of this, a parent, for example, included in the family members using the TV apparatus 10 of the embodiment can lock the replay of a desired TV program by setting a password (PIN) for this TV program. The password is supposed to be a number of four digits selected from 0 to 9. The (information indicating the) locked TV program and a password set for the locked TV program may be managed in, for example, the TV apparatus 10, or by an external server different from the TV apparatus 10.

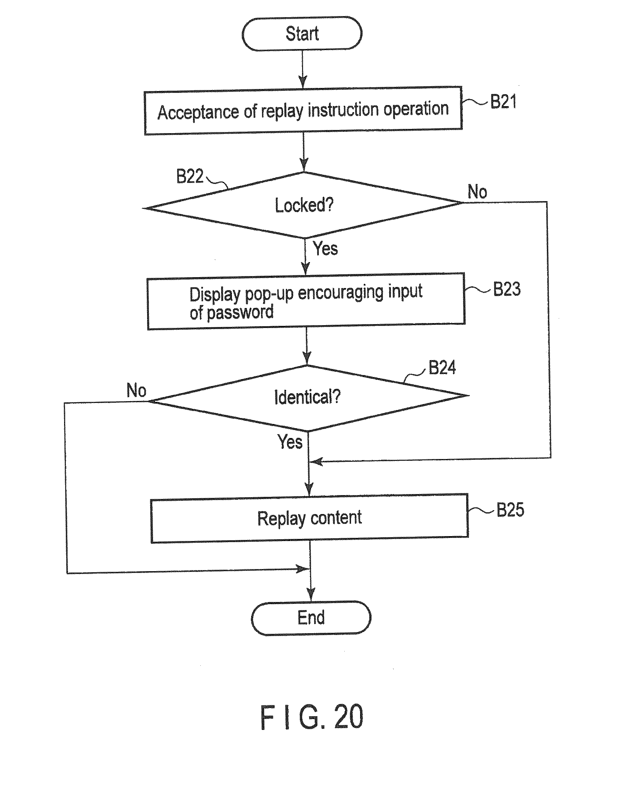

Referring then to the flowchart of FIG. 20, a procedure of processing for replaying a recorded TV program in the TV apparatus 10 of the embodiment will be described.

Firstly, it is supposed that the TV apparatus 10 has accepted a replay instruction operation for the recorded TV program (hereinafter referred to as "the replay target TV program") selected by the user (block B21).

The replay instruction operation for the replay target TV program includes, for example, a user's operation of pressing the replay button incorporated in the remote controller 20, with the focus 204 set on the replay target TV program on the MGR top page 200, and a user's operation of pressing the replay button on the TV program detail pop-up displayed when the replay target TV program has been selected and the decision button has been pressed.

Subsequently, it is determined whether the replay target TV program is locked based on the above-mentioned information managed by the TV apparatus 10 or the server (block B22).

If it is determined that the replay target TV program is locked (Yes in block B22), the TV apparatus 10 displays a pop-up (hereinafter referred to as "the password input pop-up) that stimulates input of a password (block B23). The password input pop-up displays, for example, a message "This TV program is locked, and therefore please input a password to replay this TV program." The password input pop-up further displays four boxes, in which the user can input one of the digits 0 to 9 in each box by operating, for example, (a ten key incorporated in) the remote controller 20.

An operation guide message "only one of the digits 0 to 9 can be input in each box" may be displayed, for example, below the password input pop-up.

In this case, it is determined whether a number (hereinafter, "the input number") formed of the digits input in the four boxes of the password input pop-up is identical to the password set for the replay target TV program (block B24).

If it is determined that the input number is identical to the password set for the replay target TV program (Yes in block B24), the replay target TV program (content) is replayed (block B25).

In contrast, if it is determined that the input number is not identical to the password set for the replay target TV program (No in block B24), the replay target TV program (content) is not replayed. In this case, a warning message for informing, for example, that the input number is not identical to the password is output.

Further, if it is determined that the replay target TV program is not locked (No in block B22), the processing of block B25 is executed.

In the embodiment, where, for example, the TV apparatus 10 is used by all family members, a particular person (e.g., a child) in the family members can be limited in viewing TV programs by executing the above-mentioned processing shown in FIG. 20.

Moreover, if, for example, the ages of the family members are registered when they use the TV apparatus 10, a predetermined TV program can be automatically locked.

When the replay target TV program (recorded TV program) is replayed as described above, the user can view the replay target TV program. During viewing the replay target TV program, the user can perform fast-forward replay, fast-rewind replay, etc., by operating the remote controller 20.

In association with the replay of the replay target TV program, the remote controller 20 is supposed to include a replay button, a pause button, a fast-feed button, a quick-return button, etc.

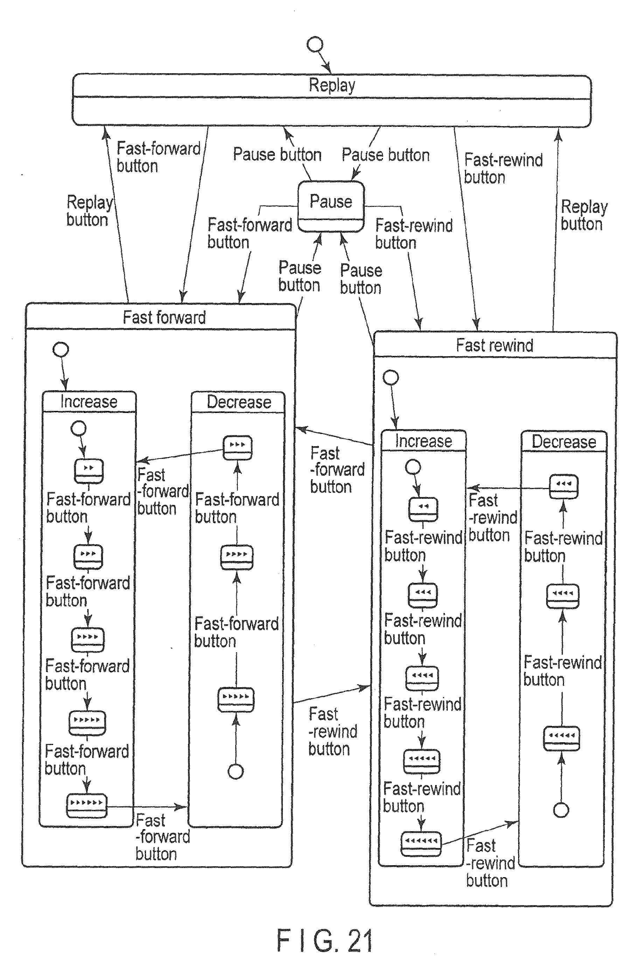

Referring then to FIG. 21, a description will be given of the state transitions of the replay target TV program that occur in accordance with user's operations of the remote controller 20. The state transitions of the replay target TV program occurring when the TV program is replayed include a replay state, a pause state, a fast-forward state and a fast-rewind state.

Firstly, when the replay of the replay target TV program has been started as described above, this TV program assumes a replay state. In the replay state, the replay target TV program is replayed at a normal speed.

Where the replay target TV program is in the replay state, if the pause button of the remote controller 20 has been pressed, the replay target TV program shifts to the pause state.

Further, where the replay target TV program is in the pause state, if the pause button of the remote controller 20 has been pressed, the replay target TV program returns to the replay state.

In contrast, where the replay target TV program is in the replay state or pause state, if the fast-forward button of the remote controller 20 has been pressed, the replay target TV program shifts to the fast-forward state. In the fast-forward state, the replay target TV program is replayed at a speed higher than normal speed (fast-forward replay) in the same direction as the replay direction in the above-mentioned replay state.

The fast-forward state includes a double-speed fast-forward state in which fast-forward replay is performed at twice normal speed, a quad-speed fast-forward state in which fast-forward replay is performed at four times normal speed, an eightfold-speed fast-forward state in which fast-forward replay is performed at eight times normal speed, a sixteen-fold-speed fast-forward state in which fast-forward replay is performed at sixteen times normal speed, and a thirty-two-fold-speed fast-forward state in which fast-forward replay is performed at thirty two times normal speed.

Transition between the above fast-forward states will be described. Firstly, when the fast-forward button has been pressed once when the replay target TV program is in the replay state or pause state, the replay target TV program shifts to the double-speed fast-forward state. Further, when the fast-forward button has been pressed again when the replay target TV program is in the double-speed fast-forward state, the replay target TV program shifts to the quad-speed fast-forward state. In other words, if, for example, the replay target TV program is in the replay state, the replay speed is doubled whenever the fast-forward button is pressed. Thus, the replay speed is thus increased.

In contrast, if the fast-forward button has been pressed after the replay target TV program shifts to the thirty-two-fold-speed fast-forward state as a result of pressing the fast-forward button several times, the replay target TV program is supposed to return to the sixteen-fold-speed fast-forward state. In other words, after the replay speed state reaches the thirty-two-fold-speed fast-forward state, the fast-forward replay speed is reduced to 1/2 whenever the fast-forward button is pressed. Thus, the relay speed is thus reduced.

Namely, in the embodiment, the fast-forward state shifts in the order of the double-speed fast-forward state, the quad-speed fast-forward state, the eightfold-speed fast-forward state, the sixteen-fold-speed fast-forward state, the thirty-two-fold-speed fast-forward state, the sixteen-fold-speed fast-forward state, the eightfold-speed fast-forward state, the quad-speed fast-forward state, the double-speed fast-forward state, the quad-speed fast-forward state, ....

Further, if the fast-rewind button incorporated in the remote controller 20 has been pressed where the replay target TV program is in the replay state or the pause state, the replay target TV program shifts to the fast-rewind state. In the fast-rewind state, the replay target TV program is replayed at a higher speed than normal speed (fast-rewind replay) in the direction opposite to the above-mentioned replay direction in the replay state.

The fast-rewind state includes a double-speed fast-rewind state in which fast-rewind replay is performed at twice normal speed, a quad-speed fast-rewind state in which fast-rewind replay is performed at four times normal speed, an eightfold-speed fast-rewind state in which fast-rewind replay is performed at eight times normal speed, a sixteen-fold-speed fast-rewind state in which fast-rewind replay is performed at sixteen times normal speed, and a thirty-two-fold-speed fast-rewind state in which fast-rewind replay is performed at thirty two times normal speed.

Transition between the above fast-rewind states will be described. Firstly, when the fast-rewind button has been pressed once when the replay target TV program is in the replay state or pause state, the replay target TV program shifts to the double-speed fast-rewind state. Further, when the fast-rewind button has been pressed again when the replay target TV program is in the double-speed fast-rewind state, the replay target TV program shifts to the quad-speed fast-rewind state. In other words, if, for example, the replay target TV program is in the replay state, the fast-rewind replay speed is doubled whenever the fast-rewind button is pressed. Thus, the fast-rewind replay speed is thus increased.

In contrast, if the fast-rewind button has been pressed after the replay target TV program shifts to the thirty-two-fold-speed fast-rewind state as a result of pressing the fast-rewind button several times, the replay target TV program is supposed to return to the sixteen-fold-speed fast-rewind state. In other words, after the replay speed state reaches the thirty-two-fold-speed fast-rewind state, the fast-rewind replay speed is reduced to 1/2 whenever the fast-rewind button is pressed. Thus, the fast-rewind relay speed is thus reduced.

Namely, in the embodiment, the fast-rewind state shifts in the order of the double-speed fast-rewind state, the quad-speed fast-rewind state, the eightfold-speed fast-rewind state, the sixteen-fold-speed fast-rewind state, the thirty-two-fold-speed fast-rewind state, the sixteen-fold-speed fast-rewind state, the eightfold-speed fast-rewind state, the quad-speed fast-rewind state, the double-speed fast-rewind state, the quad-speed fast-rewind state, ....

Further, if the replay button incorporated in the remote controller 20 has been pressed where the replay target TV program is in the fast-forward state or the fast-rewind state, the replay target TV program returns to the replay state. If the pause button incorporated in the remote controller 20 has been pressed where the replay target TV program is in the fast-forward state or the fast-rewind state, the replay target TV program shifts to the pause state.

In contrast, if the fast-rewind button incorporated in the remote controller 20 has been pressed where the replay target TV program is in the fast-forward state, the replay target TV program shifts to the fast-rewind state (e.g., double-speed fast-rewind state). Similarly, if the fast-forward button incorporated in the remote controller 20 has been pressed where the replay target TV program is in the fast-rewind state, the replay target TV program shifts to the fast-forward state (e.g., double-speed fast-forward state).

A description will be given of (a widget corresponding to the MGR function displayed in) the display area 104 provided in the above-described cloud menu screen 100 shown in FIG. 1.

The information in association with the MGR function is displayed in the display area 104. It is supposed that this information differs depending upon the setting state of the MGR function. The information displayed in the display area 104 will be described in association with each setting state of the MGR function. The setting state of the MGR function includes a state (hereinafter referred to as "the service-provider unset state") in which the above-mentioned service provider, for example, is not set, a state (hereinafter referred to as "the automatic recording function OFF state") in which the service provider is set but the automatic recording function is in the OFF state, and a state (hereinafter referred to as "the automatic recording function ON state") in which the service provider is set and the automatic recording function is in the ON state.

Firstly, the service-provider unset state will be described. In this case, the display area 104 displays, as well as a service name in the MGR function, a message, for example, "Please set a service provider (TV provider) before using the MGR function." If, in this case, the widget corresponding to the MGR function has been selected and the decision button has been pressed, a setting screen (e.g., a pop-up) for the service provider is displayed. The user can set the service provider in the setting screen.

Secondly, the automatic recording function OFF state will be described. In this case, the display area 104 displays TV programs (hereinafter referred to as "the automatic recording TV program candidates") that are supposed, for example, to be automatically scheduled for recording when the automatic recording function is turned on. More specifically, if the acquisition of a log described above in the MGR check processing is allowed, automatic recording TV program candidates for the user who uses the TV apparatus 10 is displayed based on the log. In contrast, if the log acquisition is not allowed, general automatic recording TV program candidates (such as popular TV programs) are displayed. When automatic recording TV program candidates are displayed in the display area 104 as mentioned above, the titles of the automatic recording TV program candidates, thumbnail images indicating the automatic recording TV program candidates, and the like, are displayed. The automatic recording TV program candidates displayed in the display area 104 are updated whenever the cloud menu screen 100 is displayed.

The display area 104 further displays, as well as the service name in the MGR function, a message, for example, "This TV apparatus can automatically record these TV programs (automatic recording TV program candidates) that you feel great."

Namely, when the automatic recording function is not in the ON state, the automatic recording TV program candidates and the message displayed in the display area 104 encourage the user to use the automatic recording function.

Further, when the widget corresponding to the MGR function has been selected and the decision button has been pressed, the above-described MGR check processing, for example, is started to thereby turn on the automatic recording function.

Thirdly, the automatic recording function ON state will be described. In this case, the display area 104 displays, for example, three automatically-scheduled-for-recording TV programs (the TV programs automatically scheduled for recording by the automatic recording function) whose recording times are the next. When the display area 104 thus displays automatically-scheduled-for-recording TV programs, the titles of the automatically-scheduled-for-recording TV programs, thumbnail images indicating the automatically-scheduled-for-recording TV programs, and the like, are displayed.

In contrast, when no automatically-scheduled-for-recording TV programs exist, the display area 104 may display the above-mentioned general automatic recording TV program candidates, or a widget indicating, for example, that no automatically-scheduled-for-recording TV programs exist.

The automatically-scheduled-for-recording TV programs displayed in the display area 104 are updated whenever the cloud menu screen 100 is displayed.

In addition, the display area 104 displays, as well as the service name in the MGR function, a message, for example, "This TV apparatus records these TV programs (automatically-scheduled-for-recording TV programs) that you feel great."

Namely, when the automatic recording function is in the ON state, the TV programs automatically scheduled for recording by the automatic recording function can be provided to the user by displaying the automatically-scheduled-for-recording TV programs and the message in the display area 104.

As described above, in the embodiment, a scheduled/recorded TV program list (MGR top page 200) including both (the icons of) a plurality of scheduled-for-recording TV programs and (the icons of) a plurality of recorded TV programs can be displayed in accordance with a user's operation (for instructing the use of the MGR function). In the scheduled/recorded TV program list, the plurality of scheduled-for-recording TV programs and the plurality of recorded TV programs are arranged in a matrix in time/date order (at which each TV program is scheduled for recording based on the recording schedule, or was recorded). Further, in the scheduled/recorded TV program list, the scheduled-for-recording TV program to be recorded next based on scheduling for recording is arranged near the most recently recorded TV program (i.e., the newest recorded TV program). Furthermore, in, for example, a default state (namely, when a transition to the MGR top page 200 has been made), the focus 204 used for selecting a TV program in the scheduled/recorded TV program list is set on (the icon of) the most recently recorded TV program.

Thus, since in the embodiment, the scheduled/recorded TV program list arranged in a matrix based on their time/date information is displayed as one screen image, the visibility can be enhanced, compared to the case where scheduled-for-recording TV programs and recorded TV programs are simply arranged in time/date order.

Further, in the embodiment, since the scheduled-for-recording TV program to be recorded next based on scheduling for recording is arranged near the most recently recorded TV program, important TV programs (e.g., the scheduled-for-recording TV program to be recorded next based on scheduling for recording, and the most recently recorded TV program) in the scheduled/recorded TV program list can be intuitively grasped.

Furthermore, in the embodiment, the focus 204 is set on the most recently recorded TV program when the scheduled/recorded TV program list is displayed. This means that the operability of an important TV program that may well be treated as an operation target is enhanced.

Moreover, in the embodiment, when one TV program (a series-constituting TV program) of a series of TV programs has been selected using the focus 204, a list of (the icons of) the TV programs included in the series of TV programs is displayed. In contrast, when a TV program other than the series of TV programs has been selected, the information associated with this TV program is displayed. Thus, the information associated with the selected TV program can be provided to the user, and the operability of the series of TV programs can be enhanced.

In addition, in the embodiment, when a screen image has been shifted from the screen image (MGR top page 200) displaying the scheduled/recorded TV program list to another screen image after the focus 204 is moved, the TV program on which the focus 204 is set (i.e., the focused TV program) is stored. Based on the stored data, when the scheduled/recorded TV program list is displayed again, the scheduled/recorded TV program list is displayed so that (the icon of) the stored TV program is set (displayed) in a predetermined position. Thus, even when the scheduled/recorded TV program list has been displayed again, the user can intuitively grasp the TV program on which the focus 204 was set (i.e., the TV program they noticed).

Also, in the embodiment, a plurality of TV programs included in a series of TV programs are collectively displayed using (the icon of) a single folder, and the folder is arranged in the scheduled/recorded TV program list, based on the most recent time/date among the times/dates on which each of the TV programs is recorded. Further, in the embodiment, if a not-yet recorded TV program included in a plurality of already broadcasted TV programs belonging to a series of TV programs has been scheduled for recording, the folder of this series of TV programs is arranged in the scheduled/recorded TV program list, based on the time/date of the recording schedule at which the TV program is to be recorded. By virtue of this structure, the operability of the series of TV programs can be enhanced, and the folder of this series can be arranged in the position the user can easily detect.

Since the processing performed in the embodiment can be realized by a computer program, the same advantage as that of the embodiment can be obtained simply by installing the computer program in a computer through a computer-readable storage medium storing the computer program.

## Claims

1. A method of displaying using an electronic device **characterized by** comprising:
displaying a first screen image (200) in accordance with a user operation, the first screen image comprising first icons indicative of scheduled-for-recording TV programs and second icons indicative of recorded TV programs,
**characterized in that**
the first icons are arranged in time/date order of the scheduled-for-recording TV programs;
the second icons are arranged in time/date order of the recorded TV programs;
one of the first icons indicative of a scheduled-for-recording TV program whose recording time/date is next is arranged near one of the second icons indicative of a recorded TV program whose recording time/date is most recent; and
a focus (204) used to select at least one of the scheduled-for-recording TV programs and the recorded TV programs is set on the recorded TV programs whose recording time/date is most recent, when transition to the first screen image has been made.

2. The method of claim 1, **characterized in that** the scheduled-for-recording TV programs and the recorded TV programs comprise TV programs belonging to a series of TV programs;
when one of the TV programs belonging to the series of TV programs has been selected using the focus, a second screen image (320) comprising third icons indicative of the TV programs belonging to the series of TV programs is displayed; and
when a TV program other than the TV programs belonging to the series of TV programs has been selected using the focus, a third screen image (310) comprising information associated with the TV program is displayed.

3. The method of claim 1, **characterized by** further comprising:
moving the focus in accordance with a user operation; and
storing a TV program on which the focus is set after the focus is moved, when the first screen image has been shifted to another screen image after the focus is moved,
**characterized in that** when the first screen image is re-displayed, it is displayed such that an icon indicative of the stored TV program is set in a first position.

4. The method of claim 1, **characterized in that** the scheduled-for-recording TV programs and the recorded TV programs comprise TV programs belonging to a series of TV programs;
the TV programs belonging to the series of TV programs are displayed on the first screen image using a fourth icon (241c) indicative of a folder; and
the fourth icon is arranged based on a most recent time/date of the TV programs belonging to the series of TV programs recorded.

5. The method of claim 4, **characterized in that** when a TV program in the TV programs belonging to the series of TV programs previously broadcasted and is not yet recorded, has been scheduled for recording, the fourth icon is arranged based on the scheduled time/date of the TV program to be recorded.

6. An electronic device **characterized by** comprising:
a display controller (142) configured to display, in accordance with a user operation, a first screen image (200) comprising first icons indicative of scheduled-for-recording TV programs and second icons indicative of recorded TV programs,
**characterized in that**
the first ions are arranged in time/date order of the scheduled-for-recording TV programs;
the second ions are arranged in time/date order of the recorded TV programs;
one of the first icons indicative of a scheduled-for-recording TV program whose recording time/date is next is arranged near a second icon indicative of a recorded TV program whose recording time/date is most recent; and
a focus (204) used to select at least one of the scheduled-for-recording TV programs and the recorded TV programs is set on the recorded TV program whose recording time/date is most recent, when transition to the first screen image has been made.

7. The electronic device of claim 6, **characterized in that**
the scheduled-for-recording TV programs and the recorded TV programs comprise TV programs belonging to a series of TV programs;
when one of the TV programs belonging to the series of TV programs has been selected using the focus, a second screen image (320) comprising third icons indicative of the TV programs belonging to the series of TV programs is displayed; and
when a TV program other than the TV programs belonging to the series of TV programs has been selected using the focus, a third screen image (310) comprising information associated with the TV program is displayed.

8. The electronic device of claim 6, **characterized by** further comprising:
a moving controller (142) configured to move the focus in accordance with the user operation; and
storage configured to store a TV program on which the focus is set after the focus is moved, when the first screen image has been shifted to another screen image after the focus is moved,
**characterized in that** when the first screen image is re-displayed, it is displayed such that an icon indicative of the stored TV program is set in a first position.

9. The electronic device of claim 6, **characterized in that**
the scheduled-for-recording TV programs and the recorded TV programs comprise TV programs belonging to a series of TV programs;
the TV programs belonging to the series of TV programs are displayed on the first screen image using a fourth icon indicative of a folder; and
the fourth icon (241c) is arranged based on a most recent time/date of the TV programs belonging to the series of TV programs recorded.

10. The electronic device of claim 9, **characterized in that** when a TV program in the TV programs belonging to the series of TV programs previously broadcasted and is not yet recorded, has been scheduled for recording, the fourth icon is arranged based on time/date of the TV program to be recorded.

11. A non-transitory, computer-readable storage medium having stored thereon a computer program which is executable by a computer, the computer program **characterized by** comprising instructions capable of causing the computer to execute functions of:
displaying a first screen image (200) in accordance with the user operation, the first screen image comprising first icons indicative of scheduled-for-recording TV programs and second icons indicative of recorded TV programs,
**characterized in that**
the first ions are arranged in time/date order of the scheduled-for-recording TV programs;
the second ions are arranged in time/date order of the recorded TV programs;
one of the first icons indicative of a scheduled-for-recording TV program whose recording time/date is next is arranged near a second icon indicative of a recorded TV program whose recording time/date is most recent; and
a focus (204) used to select at least one of the scheduled-for-recording TV programs and the recorded TV programs is set on the recorded TV programs whose recording time/date is most recent, when transition to the first screen image has been made.

12. The storage medium of claim 11, **characterized in that**
the scheduled-for-recording TV programs and the recorded TV programs comprise TV programs belonging to a series of TV programs;
when one of the TV programs belonging to the series of TV programs has been selected using the focus, a second screen image (320) comprising the icons indicative of the TV programs belonging to the series of TV programs is displayed; and
when a TV program other than the TV programs belonging to the series of TV programs has been selected using the focus, a third screen image (310) comprising information associated with the TV program is displayed.

13. The storage medium of claim 11, **characterized in that** the computer program comprises instructions capable of causing the computer to further execute functions of:
moving the focus in accordance with the user operation; and
storing a TV program on which the focus is set after the focus is moved, when the first screen image has been shifted to another screen image after the focus is moved,
**characterized in that** when the first screen image is re-displayed, it is displayed such that an icon indicative of the stored TV program is set in a first position.

14. The storage medium of claim 11, **characterized in that**
the scheduled-for-recording TV programs and the recorded TV programs comprise a plurality of TV programs belonging to a series of TV programs;
the TV programs belonging to the series of TV programs are displayed on the first screen image using a fourth icon indicative of a folder; and
the fourth icon (241c) is arranged based on a most recent time/date of the TV programs belonging to the series of TV programs recorded.

15. The storage medium of claim 14, **characterized in that** when a TV program in the TV programs belonging to the series of TV programs previously broadcasted and is not yet recorded, has been scheduled for recording, the fourth icon is arranged based on a time/date of the TV program to be recorded.
